# EUROPEAN PATENT SPECIFICATION

(11) **EP 3 678 001 B1**
(45) Date of publication and mention of the grant of the patent: **06.12.2023**
(21) Application number: 18866050.0
(22) Date of filing: 15.10.2018
(51) Int. Cl.: G06F 3/041

(54) **METHOD AND DEVICE FOR CONTROLLING OUTPUT OF REPORT**
VERFAHREN UND VORRICHTUNG ZUR STEUERUNG DER AUSGABE EINES BERICHTS
PROCÉDÉ ET DISPOSITIF DE COMMANDE D'ÉMISSION DE RAPPORT

(30) Priority: 13.10.2017 CN 201710954030; 29.12.2017 CN 201711475860
(43) Date of publication of application: 08.07.2020
(73) Proprietor: Huawei Technologies Co., Ltd., Longgang District Shenzhen, Guangdong 518129 (CN)
(72) Inventor: SHI, Yuanchun, Beijing 100084 (CN); YU, Chun, Beijing 100084 (CN); XU, Weijie, Beijing 100084 (CN); YI, Xin, Beijing 100084 (CN); WU, Siju, Shenzhen Guangdong 518129 (CN); ZHOU, Xuan, Shenzhen Guangdong 518129 (CN); XU, Jie, Shenzhen Guangdong 518129 (CN); XU, Jingjin, Shenzhen Guangdong 518129 (CN)
(74) Representative: Gill Jennings & Every LLP
(86) International application number: PCT/CN2018/110194
(87) International publication number: WO 2019/072256

(56) References cited:
- EP-A1- 2 616 912
- EP-B1- 2 616 912
- CN-A- 104 375 761
- CN-A- 105 607 844
- CN-A- 106 843 724
- CN-A- 106 959 779
- US-A1- 2008 158 168
- US-A1- 2014 368 470

## Description

### TECHNICAL FIELD

The present invention relates to the computer field, and in particular, to a report point output control method and apparatus.

### BACKGROUND

In recent years, a capacitive touchscreen has been widely used due to advantages such as a high sensitivity and a high response speed, and provides good user experience for a user especially in a smartphone field. Currently, an optical proximity sensor in a smartphone is usually used to identify an obstacle in front of a screen. When the user answers a call, the optical proximity sensor is enabled, and when the optical proximity sensor identifies that there is an obstacle within a range of a specific distance threshold, the screen is off to prevent the screen from being accidentally touched. The optical proximity sensor cannot identify an obstacle in some scenarios because of an identification angle. In addition, there is a delay from identifying an obstacle to screen-off, and an odd-form part may touch a control on the screen before screen-off. Consequently, a misoperation is caused.

In an existing capacitive touchscreen technology, only report point data of an obj ect touching a screen can be calculated, but whether the obj ect touching the screen is a finger or another part of a human body cannot be identified. Currently, when a user is making a call, an optical proximity sensor in a mobile phone is usually used to identify whether there is an obstacle in front of the screen. When an obstacle is identified, the screen of the mobile phone is off to prevent a part such as an ear or a cheek from accidentally touching a control on the screen. When the optical proximity sensor cannot identify an obstacle in some scenarios, the screen is still on during a call. Consequently, a control may be accidentally touched when a non-finger part touches the screen, and user experience is severely affected.

Currently, in a touchscreen panel (Touchscreen Panel, TP) algorithm, a large area of contact on a screen may be identified by using a feature such as a contact area, and report points generated by the large area of contact are suppressed. However, another odd-form part cannot be effectively identified, and consequently, a report point generated by an odd-form touch cannot be effectively suppressed.

US 2008/0158168 A1 discloses techniques for identifying an object in close proximity to, but not in contact with, a multi-touch touch-screen device.

WO 2012/034715 A1 discloses a method for detecting an arbitrary number of touches from an input image of a multi-touch device comprising the steps of processing the input image and obtaining a processed image; segmentation by thresholding of the processed image and obtaining a segmented image; identifying regions of the segmented image; finding a local maxima, each local maximum being of size one pixel on a sub-region inside each region; and determining at least one touch position based on the local maxima.

### SUMMARY

According to a first aspect, an embodiment of the present invention provides a report point output control method in accordance with appended claim 1.

According to another aspect, an embodiment of the present invention provides a terminal in accordance with appended claim 6.

According to still another aspect, an embodiment of the present invention provides a computer storage medium in accordance with appended claim 7.

According to still another aspect, an embodiment of the present invention provides a computer program product in accordance with appended claim 8.

### BRIEF DESCRIPTION OF DRAWINGS

FIG. 1 is a flowchart of a report point output control method according to an embodiment of the present invention;
FIG. 2A and FIG. 2B are a schematic diagram of a capacitance signal generated by a finger contacting a screen according to an embodiment of the present invention;
FIG. 3 is a schematic diagram of some features of a capacitance hot spot according to an embodiment of the present invention;
FIG. 4 is a schematic diagram of a method for determining an average shadow length according to an embodiment of the present invention;
FIG. 5 is a schematic diagram of a method for determining a shadow area according to an embodiment of the present invention;
FIG. 6 is a schematic diagram of a comparison between capacitance signals separately generated when a finger taps, and an ear and a cheek touch a screen according to an embodiment of the present invention;
FIG. 7A, FIG. 7B, and FIG. 7C are a flowchart of a report point output control method according to an embodiment of the present invention;
FIG. 8 is a structural diagram of a report point output control apparatus according to an embodiment of the present invention; and
FIG. 9 is a structural diagram of a terminal according to an embodiment of the present invention.

### DESCRIPTION OF EMBODIMENTS

The embodiments of the present invention provide a report point output control method is provided. The method includes: performing feature detection on a capacitance hot spot to determine at least one eigenvalue of the capacitance hot spot; determining, based on the at least one eigenvalue of the capacitance hot spot, whether a report point matching the capacitance hot spot is a report point generated by an odd-form touch, where the at least one eigenvalue includes at least one of a horizontal span, a longitudinal span, an eccentricity, a barycenter coordinate, a maximum capacitance value, an upper shadow length, a lower shadow length, a left shadow length, a right shadow length, an average shadow length, an upper left shadow area, a lower right shadow area, an upper right shadow area, and a lower left shadow area. One or more of capacitance features such as a shape, a scale, a size, an amplitude, a time-varying trend, and the like of a capacitance data change at the bottom of a screen are processed, so that an accidental touch is avoided without affecting a normal operation to a greatest extent.

The capacitance features such as the shape, the scale, the size, the amplitude, the time-varying trend, and the like of the capacitance data change at the bottom of the screen is further comprehensively processed by using a coordinate location generated by an operation gesture and a habit of a hand.

In each frame of a system, full-screen capacitance signals and a report point coordinate value of the hot spot is reported. An algorithm is used to calculate a capacitance hot spot corresponding to each report point, and perform a series of feature detection on the capacitance hot spot. If it is identified, by using the algorithm, that the capacitance hot spot is formed by a normal finger tapping, a corresponding report point is reported normally. If it is identified that the capacitance hot spot is formed by an odd-form touch such as an ear or a check, reporting of a corresponding report point is suppressed. It may be understood that each frame is corresponding to a moment. The touchscreen usually reports capacitance data at a fixed interval. For example, the foregoing fixed interval is 8 ms. In addition, capacitance hot spots may be corresponding to report spots in a one-to-one manner. For example, if one capacitance hot spot is not connected to another capacitance hot spot, there is only one report spot. Alternatively, one capacitance hot spot is corresponding to a plurality of report spots. For example, when two fingers touch the screen, or the ear or the cheek touches the screen, a plurality of connected capacitance hot spots is generated. In this case, the capacitance hot spot generates a plurality of report spots. Alternatively, one capacitance hot spot may not be corresponding to a report spot, for example, a capacitance hot spot generated because of noise.

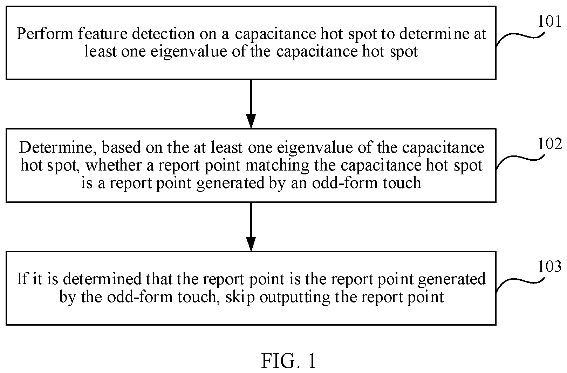

FIG. 1 is a flowchart of a report point output control method according to an embodiment of the present invention. The method may be performed but is not limited to being performed by a mobile phone with a capacitive touchscreen, and the method includes the following steps.

Step 101: Perform feature detection on a capacitance hot spot to determine at least one eigenvalue of the capacitance hot spot.

The at least one eigenvalue includes at least one of a horizontal span, a longitudinal span, an eccentricity, a barycenter coordinate, a maximum capacitance value, an upper shadow length, a lower shadow length, a left shadow length, a right shadow length, an average shadow length, an upper left shadow area, a lower right shadow area, an upper right shadow area, and a lower left shadow area.

It may be understood that, in this embodiment of the present invention, another eigenvalue such as a hot spot area of the capacitance hot spot may be further determined.

Before step 101, the capacitance hot spot is first matched against the report spot. A matching process includes: obtaining each frame of full-screen capacitance signals and a coordinate value of each report point in a report point set, where the report point set includes at least one report point; determining a capacitance hot spot set on a screen based on the full-screen capacitance signals, where the capacitance hot spot set includes at least one capacitance hot spot; and matching the report point in the report point set against the capacitance hot spot in the capacitance hot spot set, to determine report point information corresponding to the capacitance hot spot. In this implementation, the capacitance hot spot is first matched against a report spot, and then feature detection is performed on a successfully matched capacitance hot spot, so as to determine, based on the at least one eigenvalue of the capacitance hot spot, whether to output the report spot matching the capacitance hot spot. This embodiment is for a specific scenario, namely, a scenario in which the capacitance hot spot and the report point can be determined based on one-frame of full-screen capacitance signals. It may be understood that there is another scenario. For example, the capacitance hot spot can be determined but the report point is not determined based on the one-frame of full-screen capacitance signals, or neither the capacitance hot spot nor the report point is determined based on the one-frame of full-screen capacitance signals.

The determining a capacitance hot spot set on a screen based on the full-screen capacitance signals includes: determining at least one maximum value of the capacitance signals on the screen based on the full-screen capacitance signals; starting flooding from a capacitance grid corresponding to each maximum value, and adding a capacitance grid whose capacitance signal is greater than a first capacitance threshold to a first flooding area of the capacitance hot spot; and starting flooding from the capacitance grid corresponding to each maximum value, and adding a capacitance grid whose capacitance signal is greater than a second capacitance threshold to a second flooding area of the capacitance hot spot, where the first capacitance threshold is greater than the second capacitance threshold, where each capacitance hot spot includes one first flooding area and one second flooding area. In this implementation, a manner of determining the capacitance hot spot is provided. It may be understood that only one capacitance hot spot may be determined, and in this case, the capacitance hot spot set includes one capacitance hot spot. Alternatively, a plurality of capacitance hot spots is determined, and in this case, the capacitance hot spot set includes a plurality of capacitance hot spots. Each capacitance hot spot includes two areas of different sizes. A smaller area is the first flooding area, and a larger area is the second flooding area. This embodiment is for a specific scenario, namely, a scenario in which the capacitance hot spot can be determined based on one frame of full-screen capacitance signals. It may be understood that there is another scenario. For example, the capacitance hot spot is not determined based on the one frame of full-screen capacitance signals. In this case, there is no maximum value for the capacitance signals on the screen. In addition, it should be noted that, when there is a plurality of maximum values for the capacitance signals on the screen, the plurality of maximum values may be sorted in descending order. The capacitance hot spot is determined based on each maximum value in the order. When a capacitance grid corresponding to another maximum value falls within a range of the capacitance hot spot, the capacitance hot spot does not need to be determined based on the another maximum value. In other words, one maximum value may be corresponding to one capacitance hot spot, or a plurality of maximum values may be corresponding to one capacitance hot spot.

Based on the first flooding area and the second flooding area of the determined capacitance hot spot, in step 101, the at least one eigenvalue of the capacitance hot spot is determined but is not limited to being determined in the following manner: The horizontal span is a horizontal span of the first flooding area of the capacitance hot spot. The longitudinal span is a longitudinal span of the first flooding area of the capacitance hot spot. It may be preset that in a portrait mode, a horizontal direction of a screen is a latitude direction, and a vertical direction is a longitude direction. A span unit may be but is not limited to one capacitance grid. The eccentricity is an eccentricity of an ellipse obtained by fitting the first flooding area of the capacitance hot spot. The barycenter coordinate is a barycenter coordinate of the first flooding area of the capacitance hot spot. The maximum capacitance value is a maximum capacitance value in the first flooding area of the capacitance hot spot. Apart in the second flooding area that does not belong to the first flooding area is referred to as a shadow. The upper shadow length is a length of the second flooding area at an upper position of the first flooding area in the longitudinal direction. For example, a vector including a quantity of capacitance grids at an upper position of the second flooding area of each capacitance grid in the longitudinal direction at a widest part of the first flooding area in the horizontal direction is determined as the upper shadow length. The lower shadow length is a length of the second flooding area at a lower position of the first flooding area in the longitudinal direction. For example, a vector including a quantity of capacitance grids at a lower position of the second flooding area of each capacitance grid in the longitudinal direction at a widest part of the first flooding area in the horizontal direction is determined as the lower shadow length. The left shadow length is a length of the second flooding area at a left position of the first flooding area in the horizontal direction. For example, a vector including a quantity of capacitance grids at a left position of the second flooding area in the horizontal direction of each capacitance grid at a widest part of the first flooding area in the longitudinal direction is determined as the left shadow length. The right shadow length is a length of the second flooding area at a right position of the first flooding area in the horizontal direction. For example, a vector including a quantity of capacitance grids at a right position of the second flooding area in the horizontal direction of each capacitance grid at a widest part of the first flooding area in the longitudinal direction is determined as the right shadow length. The average shadow length is an average value of the upper shadow length, the lower shadow length, the left shadow length, and the right shadow length. For example, vector elements of the upper shadow length, the lower shadow length, the left shadow length, and the right shadow length are first added to obtain a first length, then a quantity of capacitance grids at a widest part of the first flooding area in the horizontal direction and a quantity of capacitance grids at a widest part of the first flooding area in the longitudinal direction are added, and then a sum is multiplied by 2 to obtain a second length, and next the first length is divided by the second length to obtain the average shadow length. The upper left shadow area is an area of the second flooding area at an upper left position of the first flooding area of the capacitance hot spot, for example, a quantity of capacitance grids at the upper left position of the first flooding area in the second flooding area. The lower right shadow area is an area of the second flooding area at a lower right position of the first flooding area of the capacitance hot spot, for example, a quantity of capacitance grids at the lower right position of the first flooding area in the second flooding area. The upper right shadow area is an area of the second flooding area at an upper right position of the first flooding area of the capacitance hot spot, for example, a quantity of capacitance grids at the upper right position of the first flooding area in the second flooding area. The lower left shadow area is an area of the second flooding area at a lower left position of the first flooding area of the capacitance hot spot, for example, a quantity of capacitance grids at the lower left position of the first flooding area in the second flooding area. In this implementation, a possible manner of defining the at least one eigenvalue is provided.

In addition, the hot spot area is further defined as a quantity of capacitance grids in a first flooding area of one capacitance hot spot.

In another example, before step 101, the capacitance hot spot does not need to be matched against the report spot. In step 101, feature detection is performed on each capacitance hot spot to determine at least one eigenvalue of the capacitance hot spot. In other words, when there is a capacitance hot spot appears but there is no report spot of a second frame, feature detection may still be performed on the capacitance hot spot, and whether a report point is reported in a third frame is determined based on a feature detection result of the second frame. It may be understood that the second frame and the third frame are frames that meet a preset condition. For example, the preset condition may be used to determine that the second frame and the third frame are included in a touch process.

Step 102: Determine, based on the at least one eigenvalue of the capacitance hot spot, whether a report point matching the capacitance hot spot is a report point generated by an odd-form touch.

In an example, step 102 includes: determining, based on the at least one eigenvalue of the capacitance hot spot, whether the report point matching the capacitance hot spot is a report point generated by a strong cheek, where a determining result includes "strong cheek", "non-strong cheek", and "uncertain"; determining, based on the at least one eigenvalue of the capacitance hot spot, whether the report point matching the capacitance hot spot is a report point generated by a weak cheek, where a determining result includes "weak cheek", "non-weak cheek", and "uncertain"; determining, based on the at least one eigenvalue of the capacitance hot spot, whether the report point matching the capacitance hot spot is a report point generated by an ear, where a determining result includes "ear", "non-ear", and "uncertain"; and when the first determining result is "strong cheek", or when the second determining result is "weak cheek", or when the third determining result is "ear", determining that the report point is the report point generated by the odd-form touch; or when the first determining result is "non-strong cheek", the second determining result is "non-weak cheek", and the third determining result is "non-ear", determining that the report point is not the report point generated by the odd-form touch. In this implementation, the odd-form touch is pre-divided into three types: "strong cheek", "weak cheek", and "ear". By separately determining whether the capacitance hot spot meets a feature of the strong cheek, determining whether the capacitance hot spot meets a feature of the weak cheek, and determining whether the capacitance hot spot meets a feature of the ear, it is comprehensively determined, with reference to the three determining results, whether the report point matching the capacitance hot spot is the report point generated by the odd-form touch, and therefore a determining result is accurate. A relationship between the three determining results: the strong cheek, the weak cheek, and the ear and the final determining result may be but is not limited to Table 1.

**Table 1**

| | Strong cheek | Weak cheek | Ear | Whether the report point matching the capacitance hot spot is the report point generated by an odd-form touch |
|---|---|---|---|---|
| Single determining result | Yes | × | × | Yes |
| Single determining result | × | Yes | × | Yes |
| Single determining result | × | × | Yes | Yes |
| Single determining result | No | No | No | No |
| Single determining | Uncertain | No | No | Uncertain |

| result | | | | |
|---|---|---|---|---|
| Single determining result | No | Uncertain | No | Uncertain |
| Single determining result | No | No | Uncertain | Uncertain |
| Single determining result | Uncertain | Uncertain | No | Uncertain |
| Single determining result | Uncertain | No | Uncertain | Uncertain |
| Single determining result | No | Uncertain | Uncertain | Uncertain |
| Single determining result | Uncertain | Uncertain | Uncertain | Uncertain |

In Table 1, "×" represents any value. In other words, when the first determining result is "strong cheek", regardless of a value of the second determining result and a value of the third determining result, it is determined that the report point corresponding to the capacitance hot spot is the report point generated by the odd-form touch. When the second determining result is "weak cheek", regardless of a value of the first determining result and a value of the third determining result, it is determined that the report point corresponding to the capacitance hot spot is the report point generated by the odd-form touch. When the third determining result is "ear", regardless of a value of the first determining result and a value of the second determining result, it is determined that the report point corresponding to the capacitance hot spot is the report point generated by the odd-form touch. When the first determining result, the second determining result, and the third determining result are all "no", it is determined that the report point corresponding to the capacitance hot spot is not the report point generated by the odd-form touch. When the first determining result, the second determining result, and the third determining result each include only "uncertain" and "no", or are all "uncertain", a determining result of whether the report point corresponding to the capacitance hot spot is the report point generated by the odd-form touch is also "uncertain".

The at least one eigenvalue further includes a hot spot area, and the hot spot area is a quantity of capacitance grids in the first flooding area of the capacitance hot spot. The determining, based on the at least one eigenvalue of the capacitance hot spot, whether the report point matching the capacitance hot spot is a report point generated by a strong cheek includes: when the hot spot area is less than a first area threshold, determining that the report point matching the capacitance hot spot is a report point generated by a non-strong cheek; or when the longitudinal span is greater than a first longitudinal span threshold, or when the average shadow length is greater than a first length threshold, or when the horizontal span is less than a first horizontal span threshold and the longitudinal span is greater than a second longitudinal span threshold, determining that the report point matching the capacitance hot spot is the report point generated by the strong cheek; or when the average shadow length is greater than a second length threshold, determining that a result is "uncertain"; or when none of the foregoing conditions is met, determining that the report point matching the capacitance hot spot is a report point generated by a non-strong cheek. In this implementation, it may be determined, by using one or more of the hot spot area, the longitudinal span, the average shadow length, and the horizontal span, whether the report point matching the capacitance hot spot is the report point generated by the strong cheek, and a determining result is accurate. In an example, the foregoing conditions have different priorities, and in the foregoing sequence, the priorities rank in descending order. Whether the foregoing conditions are met may be determined in descending order of priorities. When a condition of a higher priority is met, a subsequent condition does not need to be determined. In this case, a determining result is more accurate.

The determining, based on the at least one eigenvalue of the capacitance hot spot, whether the report point matching the capacitance hot spot is a report point generated by a weak cheek includes: when the maximum capacitance value is greater than or equal to a third capacitance threshold, or when the capacitance hot spot is attached to an upper edge of a screen and the longitudinal span is less than or equal to a third longitudinal span threshold, determining that the report point matching the capacitance hot spot is a report point generated by a non-weak cheek; or when the hot spot area is greater than or equal to a second area threshold, or when the longitudinal span is greater than or equal to a fourth longitudinal span threshold and the horizontal span is greater than or equal to a second horizontal span threshold, determining that the report point matching the capacitance hot spot is the report point generated by the weak cheek; or when the hot spot area is greater than or equal to a third area threshold, or when the longitudinal span is greater than or equal to a fifth longitudinal span threshold, determining that a result is "uncertain"; or when none of the foregoing conditions is met, determining that the report point matching the capacitance hot spot is a report point generated by a non-weak cheek. In this implementation, it may be determined, by using one or more of the maximum capacitance value, a position of the capacitance hot spot, the longitudinal span, the hot spot area, and the horizontal span, whether the report point matching the capacitance hot spot is the report point generated by the weak cheek, and a determining result is accurate. In an example, the foregoing conditions have different priorities, and in the foregoing sequence, the priorities rank in descending order. Whether the foregoing conditions are met may be determined in descending order of priorities. When a condition of a higher priority is met, a subsequent condition does not need to be determined. In this case, a determining result is more accurate.

The determining, based on the at least one eigenvalue of the capacitance hot spot, whether the report point matching the capacitance hot spot is a report point generated by an ear includes: when the maximum capacitance value is less than a fourth capacitance threshold, determining that the report point matching the capacitance hot spot is a report point generated by a non-ear; or when an axial direction of a major axis of the ellipse obtained by fitting the first flooding area of the capacitance hot spot is lower right, and the lower left shadow area is greater than or equal to a fourth area threshold, or when an axial direction of a major axis of the ellipse obtained from the first flooding area of the capacitance hot spot is lower left, and the lower right shadow area is greater than or equal to a fifth area threshold, determining that the report point matching the capacitance hot spot is the report point generated by the ear; or when the hot spot area is less than a sixth area threshold, or when the capacitance hot spot is attached to the upper edge of the screen and the longitudinal span is less than or equal to a sixth longitudinal span threshold, determining that the report point matching the capacitance hot spot is a report point generated by a non-ear; or when the resistivity is greater than a first resistivity threshold and a vertical coordinate in the barycenter coordinate is greater than a first coordinate threshold, determining that the report point matching the capacitance hot spot is the report point generated by the ear; or when the resistivity is greater than a second resistivity threshold, determining that a result is "uncertain"; or when none of the foregoing conditions is met, determining that the report point matching the capacitance hot spot is a report point generated by a non-ear. In this implementation, it may be determined, by using one or more of the maximum capacitance value, a shape of the capacitance hot spot, the lower left shadow area, the lower right shadow area, the hot spot area, the position of the capacitance hot spot, the longitudinal span, the resistivity, and the barycenter coordinate, whether the report point matching the capacitance hot spot is the report point generated by the ear, and a determining result is accurate. In an example, the foregoing conditions have different priorities, and in the foregoing sequence, the priorities rank in descending order. Whether the foregoing conditions are met may be determined in descending order of priorities. When a condition of a higher priority is met, a subsequent condition does not need to be determined. In this case, a determining result is more accurate.

In an example, the method further includes: when the first determining result, the second determining result, and the third determining result of a first frame are all "uncertain", storing a coordinate of the report point of the first frame; and when it is determined, in a subsequent preset quantity of frames, that the report point is the report point generated by the odd-form touch, determining that the report point in the first frame is the report point generated by the odd-form touch; or when it is determined, in a subsequent preset quantity of frames, that the report point is not the report point generated by the odd-form touch, or when the first determining result, the second determining result, and the third determining result in the subsequent preset quantity of frames are all "uncertain", determining that the report point in the first frame is not the report point generated by the odd-form touch, and outputting the report point based on the coordinate of the report point of the first frame. In this implementation, in a process from tapping a screen to lifting a finger by a user, capacitance hot spots are generated on a capacitive touchscreen in several consecutive frames of a time sequence. A shape of the capacitance hot spot continuously varies with a contact area and a contact position of the finger. A process from appearing to disappearing of the capacitance hot spot is referred to as one lifecycle of the capacitance hot spot. One lifecycle is corresponding to several consecutive frames of capacitance hot spots. After a capacitance hot spot of a current frame is obtained through calculation, a previous frame is searched for each capacitance hot spot to determine whether a corresponding capacitance hot spot can be found. If a matched capacitance hot spot can be found, the capacitance hot spot of the current frame is added to a lifecycle corresponding to the previous frame of the capacitance hot spot for management. If no matched capacitance hot spot is found, a new lifecycle is established, and the current hot spot is added to the lifecycle. In other words, it may be comprehensively determined, based on a determining result of each frame in the lifecycle of the capacitance hot spot, whether the report point corresponding to the capacitance hot spot is the report point generated by the odd-form touch.

In an example, the capacitance hot spot set includes a plurality of capacitance hot spots. The method in step 102 is used to separately determine whether a report point corresponding to each capacitance hot spot in the plurality of capacitance hot spots is the report point generated by the odd-form touch, or after it is determined that the report point corresponding to the capacitance hot spot is the report point generated by the odd-form touch, it is determined that report points corresponding to other undetermined capacitance hot spots are all report points generated by an odd-form touch. For example, before step 102, it is determined whether a current state is an odd-form state; and if the current state is the odd-form state, it is determined that a report point corresponding to each capacitance hot spot in the plurality of capacitance hot spots is the report point generated by the odd-form touch; or if the current state is not the odd-form state, it is determined, based on the at least one eigenvalue of the capacitance hot spot, whether the report point is the report point generated by the odd-form touch; and when it is determined that the report point is the report point generated by the odd-form touch, the current state is switched to the odd-form state. In this implementation, an initial state value is set to a non-odd-form state. When there are a plurality of capacitance hot spots, in other words, there are a plurality of report spots, after it is determined that one of the plurality of report spots is the report point generated by the odd-form touch, the current state is switched to the odd-form state, so that when it is determined whether another report spot is the report point generated by the odd-form touch, it may be directly determined, based on that the current state is the odd-form state, that the report spot is the report point generated by the odd-form touch, and feature detection does not need to be performed on a capacitance hot spot corresponding to the another report spot. Therefore, processing resources of the terminal are effectively reduced, determining is performed quickly, and user experience is good.

Step 103: If it is determined that the report point is the report point generated by the odd-form touch, skip outputting the report point.

In this embodiment of the present invention, it is determined, based on the at least one eigenvalue of the capacitance hot spot, whether the report point matching the capacitance hot spot is the report point generated by the odd-form touch. The at least one eigenvalue includes the at least one of the horizontal span, the longitudinal span, the eccentricity, the barycenter coordinate, the maximum capacitance value, the upper shadow length, the lower shadow length, the left shadow length, the right shadow length, the average shadow length, the upper left shadow area, the lower right shadow area, the upper right shadow area, and the lower left shadow area. The one or more of the capacitance features such as the shape, the scale, the size, the amplitude, the time-varying trend, and the like of the capacitance data change at the bottom of the screen are processed, so that an accidental touch is avoided without affecting a normal operation to a greatest extent.

The following more specifically describes the report point output control method provided in the present invention by using an embodiment.

This embodiment of the present invention is mainly applied to a capacitive touchscreen. It is determined, by using a series of features of the capacitance hot spot corresponding to the report point, whether the report point is caused by the odd-form touch, and output of the report point caused by the odd-form touch is suppressed. The method is mainly divided into three parts: capacitance hot spot calculation, hot spot feature extraction, and odd-form determining.

### Part 1: Capacitance hot spot calculation:

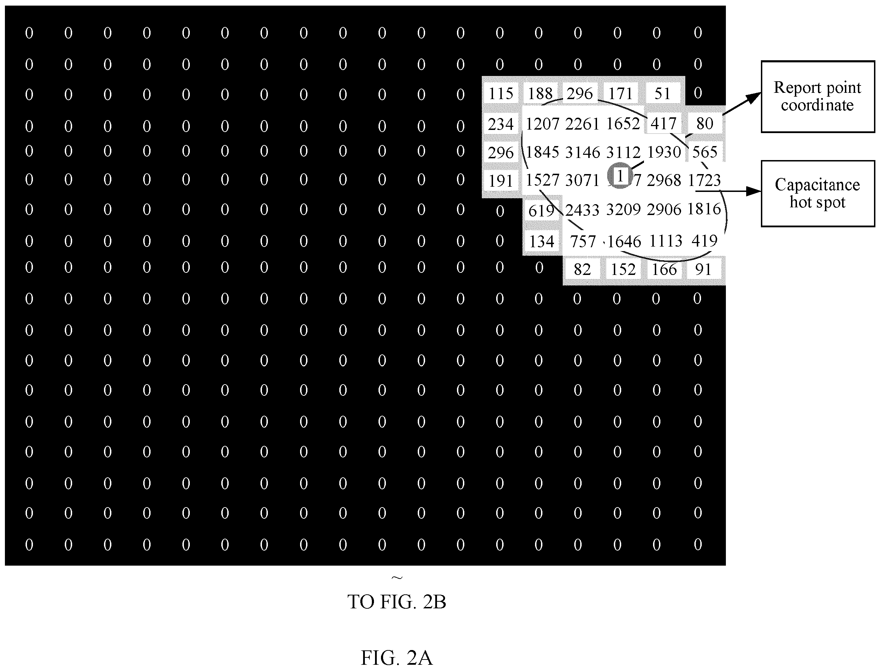

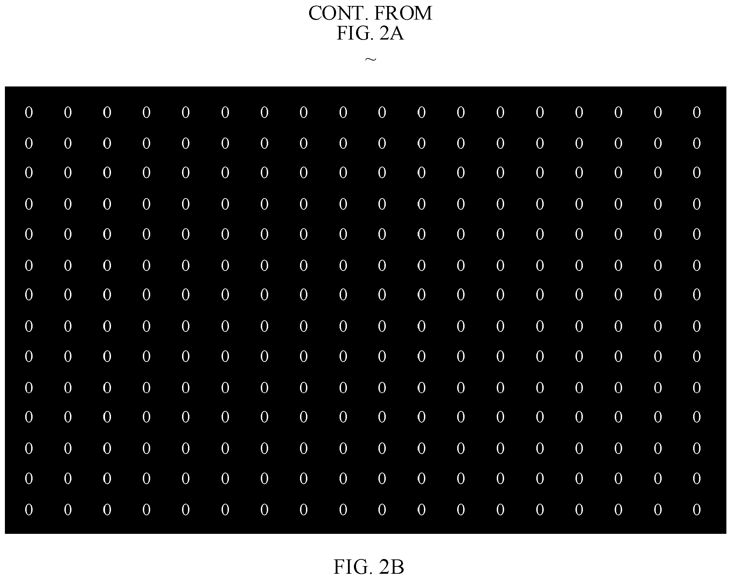

FIG. 2A and FIG. 2B are a schematic diagram of a capacitance signal generated by a finger contacting a screen according to an embodiment of the present invention. For a mobile phone, a form of capacitance signals of an entire screen is a matrix. Each element in the matrix is corresponding to a capacitance grid at a corresponding position on the capacitive touchscreen. Data of the element represents a capacitance value (strength of the capacitance signal) in the region. Referring to FIG. 2A and FIG. 2B, a capacitance value in a region that is not in contact with a finger on the screen is 0, and a capacitance value in a region that is in contact with a finger on the screen is not 0. In other words, a capacitance signal in a region that is in contact with a human body on the screen is relatively strong, and signals in other regions on the screen are relatively weak. The processor may obtain capacitance signals of an entire screen based on a fixed frequency, and calculate, based on the capacitance signal, whether a report point and a coordinate position of each report point need to be output. It may be understood that the processor may calculate the report point by using any one of existing methods. Details are not described herein. First, a flooding algorithm is used to calculate all the capacitance hot spots on the screen, and the report spots are matched with the capacitance hot spots. The capacitance hot spot needs to meet a series of conditions to generate the report point. Therefore, not all the capacitance hot spots can find a corresponding report point. It may be understood that each frame of TP may report capacitance data. The processor calculates the capacitance hot spot, and then calculates the report spot based on the capacitance hot spot. In the report point output control method provided in this embodiment of the present invention, determining the report point and determining the capacitance hot spot may be considered as two independent processes. Although in the process of determining the report point, the capacitance hot spot may also be determined, in this embodiment of the present invention, in a process of determining the odd-form touch, the capacitance hot spot may also be calculated, and a calculation manner may be different from a manner of determining the capacitance hot spot in a process of determining the report point. Therefore, the capacitance hot spot and the report point need to be matched, for example, a capacitance hot spot of an odd-form calculation and a report point coordinate that is output by using a TP algorithm are matched.

The flooding algorithm is based on a breadth first search. First, a maximum value of all capacitance signals needs to be calculated (a capacitance signal greater than eight adjacent lattices, and a capacitance signal outside the screen is considered as a negative infinity), and then flood is started from a maximum value. In a process of the breadth first search, a fixed threshold may be used for determining. An obtained capacitance grid may be added to a current region provided that the capacitance signal is greater than a fixed threshold.

After the breadth first search ends, the report point is matched with the capacitance hot spot, namely, a correspondence is established between a report point and a capacitance hot spot. For example, if a report point falls into a capacitance hot spot, it is considered that the report point is a report point corresponding to the capacitance hot spot.

In a process in which a user taps a screen and lifts a finger, capacitance hot spots are generated on a capacitive touchscreen in several consecutive frames of a time sequence. A shape of the capacitance hot spot continuously varies with a contact area and a contact position of the finger. In this embodiment of the present invention, a process from appearing to disappearing of the capacitance hot spot is referred to as a lifecycle of the capacitance hot spot. One lifecycle is corresponding to several consecutive frames of capacitance hot spots. After a capacitance hot spot of a current frame is obtained through calculation, a corresponding capacitance hot spot is searched for each capacitance hot spot in a previous frame. If a matched capacitance hot spot can be found, the capacitance hot spot of the current frame is added to a lifecycle corresponding to the previous frame of the capacitance hot spot for management. If no matched capacitance hot spot is found, a new lifecycle is established, and the current capacitance hot spot is added to the lifecycle.

In an example, when a local maximum value of the capacitance is used as a center to calculate the capacitance hot spot, two different thresholds may be used to calculate two capacitance hot spots with different sizes. A capacitance hot spot area calculated by using a high threshold is referred to as a first flooding area, and a capacitance hot spot area calculated by using a low threshold is referred to as a second flooding area.

### Part 2: Capacitance hot spot extraction:

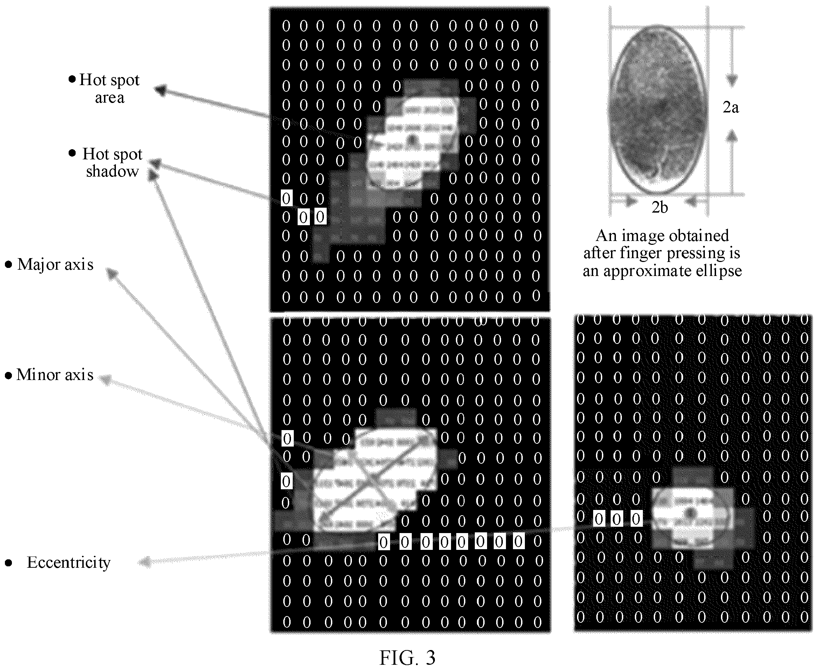

Capacitance signals generated by pressing the capacitive touchscreen with a finger may be an approximate ellipse. A main idea of the algorithm is to determine, by setting a series of feature detection, whether a capacitance hot spot corresponding to a report point meets a feature of a normal report point. If a capacitance hot spot corresponding to a report point does not meet the feature of the normal report point, the report point is determined as an odd-form. Related features are as follows (referring to FIG. 3, FIG. 4, and FIG. 5):

(1) Hot spot area *S*: a quantity of capacitance grids in the first flooding area of the capacitance hot spot.

As shown in FIG. 3, a white oval area at the center of the figure is the first flooding area, and a quantity of capacitance grids in the area is the hot spot area. The white oval area and a circle of gray area around the white oval area are the second flooding area, and the foregoing circle of gray area is a hot spot shadow. The first flooding area formed by finger pressing is an approximate ellipse, a major axis of the ellipse is marked as 2a, and a minor axis of the ellipse is marked as 2b.

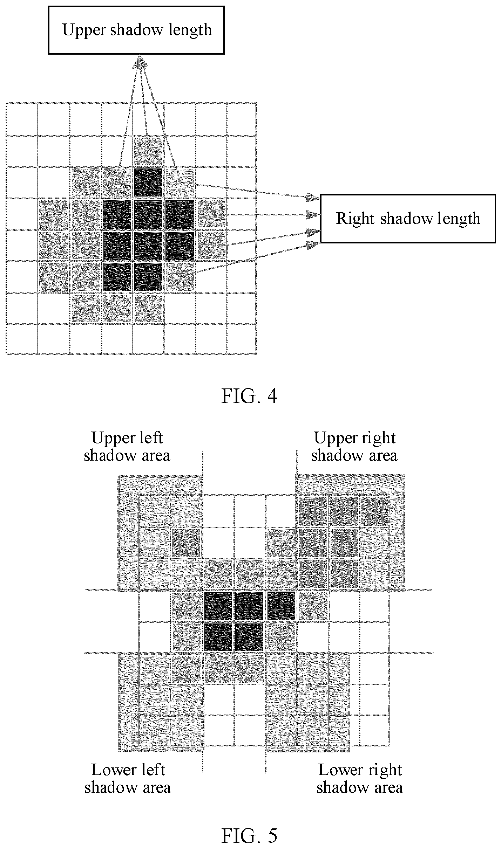

For example, as shown in FIG. 4, a dark color part in the center is the first flooding area, and a quantity of capacitance grids in the area is 9, namely, the hot spot area is 9.

(2) Horizontal span *xSPan* : a span of the first flooding area of the capacitance hot spot in a horizontal direction.

In an example, in a portrait mode, a horizontal direction of the screen is latitude, and a vertical direction of the screen is longitude.

For example, as shown in FIG. 4, a horizontal span is 3.

(3) Longitudinal span *ySPan* : a span of the first flooding area of the capacitance hot spot in a longitudinal direction.

In an example, in a portrait mode, a horizontal direction of the screen is latitude, and a vertical direction of the screen is longitude.

For example, as shown in FIG. 4, a longitudinal span is 4.

(4) Major axis *major* : a major axis of the ellipse obtained from the first flooding area of the capacitance hot spot.

(5) Minor axis *minor* : a minor axis of the ellipse obtained from the first flooding area of the capacitance hot spot.

For example, as shown in FIG. 3, a length of the major axis is 2a, and a length of the minor axis is 2b.

(6) Eccentricity *e* : an eccentricity of the ellipse obtained from the first flooding area of the capacitance hot spot.

A normal algorithm may be used to calculate the eccentricity of the ellipse. Details are not described herein.

(7) Barycenter coordinate *Gx* , *Gy* : a barycenter coordinate of the first flooding area of the capacitance hot spot.

A normal algorithm may be used to calculate the barycenter coordinate. Details are not described herein.

(8) Maximum capacitance value *maxCapacity* : a maximum capacitance value in the first flooding area of the capacitance hot spot.

(9) Average shadow length *avgShadowLength* : an average shadow length around the first flooding area of the capacitance hot spot.

The average shadow length is an average value of an upper shadow length, a lower shadow length, a left shadow length, and a right shadow length.

A part in the second flooding area that does not belong to the first flooding area is referred to as a hot spot shadow. The upper shadow length is a length of the second flooding area at an upper position of the first flooding area in the longitudinal direction, for example, a vector including a quantity of capacitance grids at an upper position of the second flooding area in the longitudinal direction of each capacitance grid at a widest part of the first flooding area in the horizontal direction is determined as the upper shadow length; the lower shadow length is a length of the second flooding area at a lower position of the first flooding area in the longitudinal direction, for example, a vector including a quantity of capacitance grids at a lower position of the second flooding area in the longitudinal direction of each capacitance grid at a widest part of the first flooding area in the horizontal direction is determined as the lower shadow length; the left shadow length is a length of the second flooding area at a left position of the first flooding area in the horizontal direction, for example, a vector including a quantity of capacitance grids at a left position of the second flooding area in the horizontal direction of each capacitance grid at a widest part of the first flooding area in the longitudinal direction is determined as the left shadow length; the right shadow length is a length of the second flooding area at a right position of the first flooding area in the horizontal direction, for example, a vector including a quantity of capacitance grids at a right position of the second flooding area in the horizontal direction of each capacitance grid at a widest part of the first flooding area in the longitudinal direction is determined as the right shadow length.

When the average shadow length is determined, vector elements of the upper shadow length, the lower shadow length, the left shadow length, and the right shadow length may be summed up to obtain a first length, then a quantity of capacitance grids at a widest part of the first flooding area in the horizontal direction and a quantity of capacitance grids at a widest part of the first flooding area in the longitudinal direction are summed up, then is multiplied by 2, to obtain a second length, and the first length is divided by the second length to obtain the average shadow length.

Referring to FIG. 4, a dark color area in the figure is the first flooding area, the dark color area and a light color area are the second flooding area. Upper shadow lengths are 1, 1, 1; lower shadow lengths are 1, 1, 1; left shadow lengths are 2, 2, 2, 2; right shadow lengths are 1, 1, 1, 1; and the average shadow length is 18/14 = 1.29.

(10) Upper/Lower shadow area *shadowS* : an upper shadow area *upShadowS* of the first flooding area of the capacitance hot spot and a lower shadow area *downShadowS* .

When the upper shadow area is determined, an extension line may be drawn upward from an edge at a widest part of the first flooding area in the horizontal direction, and a quantity of capacitance grids of a hot spot shadow surrounded by extension lines of two edges is used as the upper shadow area. When the lower shadow area is determined, an extension line may be drawn downward from an edge at a widest part of the first flooding area in the horizontal direction, and a quantity of capacitance grids of a hot spot shadow surrounded by extension lines of two edges is used as the lower shadow area.

In this embodiment of the present invention, the upper left shadow area (a shadow area at the upper left), the lower right shadow area (a shadow area at the lower right), the upper right shadow area (a shadow area at the upper right), and the lower left shadow area (a shadow area at the lower left) are further included. The upper left shadow area is an area of the second flooding area at an upper left position of the first flooding area of the capacitance hot spot, for example, a quantity of capacitance grids at an upper left position of the first flooding area in the second flooding area. When the upper left shadow area is determined, an extension line may be drawn towards the left from an upper edge of the first flooding area, an extension line may be drawn upward from a left edge of the first flooding area, and a quantity of capacitance grids of a hot spot shadow surrounded by extension lines of two edges is used as the upper left shadow area. The lower right shadow area is an area of the second flooding area at a lower right position of the first flooding area of the capacitance hot spot, for example, a quantity of capacitance grids at a lower right position of the first flooding area in the second flooding area. When the lower right shadow area is determined, an extension line may be drawn towards the right from a lower edge of the first flooding area, an extension line may be drawn downward from a right edge of the first flooding area, and a quantity of capacitance grids of a hot spot shadow surrounded by extension lines of two edges is used as the lower right shadow area. The upper right shadow area is an area of the second flooding area at an upper right position of the first flooding area of the capacitance hot spot, for example, a quantity of capacitance grids at an upper right position of the first flooding area in the second flooding area. When the upper right shadow area is determined, an extension line may be drawn towards the right from an upper edge of the first flooding area, an extension line may be drawn upward from a right edge of the first flooding area, and a quantity of capacitance grids of a hot spot shadow surrounded by extension lines of two edges is used as the upper right shadow area. The lower left shadow area is an area of the second flooding area at a lower left position of the first flooding area of the capacitance hot spot, for example, a quantity of capacitance grids at a lower left position of the first flooding area in the second flooding area. When the lower left shadow area is determined, an extension line may be drawn towards the left from a lower edge of the first flooding area, an extension line may be drawn downward from a left edge of the first flooding area, and a quantity of capacitance grids of a hot spot shadow surrounded by extension lines of two edges is used as the lower left shadow area.

Referring to FIG. 5, a dark color area in the figure is the first flooding area, the dark color area and a light color area are the second flooding area. The upper left shadow area is 1, the upper right shadow area is 7, the lower left shadow area is 1, the lower right shadow area is 0, the upper shadow area is 4, and the lower shadow area is 3.

### Part 3: Odd-form determining:

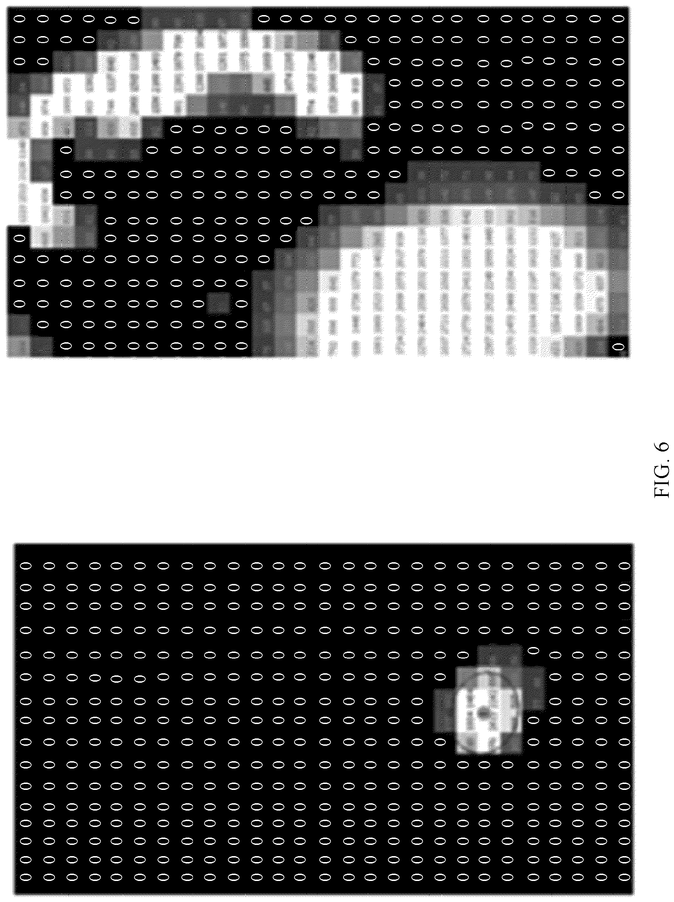

When a finger, a cheek, and an ear touch the screen, different capacitance signals may be generated. For example, FIG. 6 is a diagram of a comparison between capacitance signals separately generated when the finger, and the cheek and the ear touch the screen, where a left part is capacitance signals generated when the finger taps the screen, and a right part is capacitance signals generated when the cheek and the ear touch the screen. In this embodiment of the present invention, a series of feature conditions are determined for capacitance hot spots of each frame. After the conditions are determined, the capacitance hot spot may be determined as the following types:

### Touch: a normal tap.

StrongFace: a strong cheek. A capacitance signal generated when a check sticks on a screen during a call.

WeakFace: a weak cheek. A capacitance signal generated when a check touches a screen from time to time during a call.

Ear: an ear. A capacitance signal generated when an ear touches a screen during a call.

Uncertain: uncertain. A finger or an odd form cannot be determined.

In each frame, if the capacitance hot spot is determined as Touch, a corresponding report point may be reported. The report point is not determined when the report is started. If the capacitance hot spot is determined as StrongFace, WeakFace, or Ear, a corresponding report point is suppressed. After the suppression is started, the report point is not determined. If the capacitance hot spot is determined as Uncertain, the report point is temporarily suppressed, and the capacitance hot spot is continued to be determined in several subsequent frames. If the capacitance hot spot is determined as a normal tap or an odd form in several frames that are allowed to be put off, the report point is reported or suppressed. If a type the capacitance hot spot is not determined in the several frames that are allowed to be put off, the report point is reported.

Determining conditions of the strong cheek: Check whether a capacitance hot spot is the strong cheek by using the following conditions. If it is identified that the capacitance hot spot is the strong cheek or the non-strong cheek, no subsequent determining is performed; or if it is not identified that the capacitance hot spot is the strong cheek or the non-strong cheek, all cheeks are performed. In implementation, only a few of the conditions may be used for determining.

S<S_threshold_strong: non-strong cheek. S is a hot spot area, and S_threshold_strong is a first area threshold. In other words, when the hot spot area is less than the first area threshold, it is determined that a report point matching the capacitance hot spot is a report point generated by the non-strong cheek.

ySpan>ySpan_threshold_strong_max: strong cheek. ySpan is a longitudinal span, and ySpan_threshold_strong_max is a first longitudinal span threshold. In other words, when the longitudinal span is greater than the first longitudinal span threshold, it is determined that the report point matching the capacitance hot spot is a report point generated by the strong cheek.

avgShadowLength>avgShadowLength_threshold_strong: strong cheek. avgShadowLength is an average shadow length, and avgShadowLength _threshold_strong is a first length threshold. In other words, when the average shadow length is greater than the first length threshold, it is determined that the report point matching the capacitance hot spot is a report point generated by the strong cheek.

xSpan<xSpan_threshold_strong and ySpan>ySpan_threshold_strong: strong cheek. xSpan is a horizontal span, xSpan _threshold_strong is a first horizontal span threshold, ySpan is a longitudinal span, and ySpan_threshold_strong is a second longitudinal span threshold. In other words, when the horizontal span is less than the first horizontal span threshold and the longitudinal span is greater than the second longitudinal span threshold, it is determined that the report point matching the capacitance hot spot is a report point generated by the strong cheek.

avgShadowLength>avgShadowLength_threshold_strong _uncertain: uncertain. avgShadowLength is an average shadow length, and avgShadowLength _threshold_strong_uncertain is a second length threshold. In other words, when the average shadow length is greater than the second length threshold, a determining result is uncertain.

If none of the foregoing conditions is met, the capacitance hot spot area is determined as the non-strong cheek. In other words, when none of the foregoing conditions is met, it is determined that the report point matching the capacitance hot spot is a report point generated by the non-strong cheek.

Determining conditions of the weak cheek: Check whether a capacitance hot spot is the weak cheek by using the following conditions in an algorithm. If it is identified that the capacitance hot spot is the weak cheek or the non-weak cheek, no subsequent determining is performed; or if it is not identified that the capacitance hot spot is the weak cheek or the non-weak cheek, all cheeks are performed. In implementation of the algorithm, only a few of the conditions may be used for determining.

MaxCapacity ≥ maxCapacity _threshold_weak: non-weak cheek. MaxCapacity is a maximum capacitance value, and maxCapacity_threshold_weak is a third capacitance threshold. In other words, when the maximum capacitance value is greater than or equal to the third capacitance threshold, it is determined that the report point matching the capacitance hot spot is a report point generated by the non-weak cheek.

The capacitance hot spot is attached to an upper edge of a screen and ySpan ≤ ySpan_threshold_no_weak: non-weak cheek. ySpan is a longitudinal span, and ySpan_threshold_no_weak is a third longitudinal span threshold. In other words, when the capacitance hot spot is attached to an upper edge of a screen, and the longitudinal span is less than or equal to the third longitudinal span threshold, it is determined that the report point matching the capacitance hot spot is a report point generated by the non-weak cheek.

S ≥ S_threshold_weak: weak cheek. S is a hot spot area, and S_threshold_weak is a second area threshold. In other words, when the hot spot area is greater than or equal to the second area threshold, it is determined that a report point matching the capacitance hot spot is a report point generated by the weak cheek.

ySpan ≥ ySpan_threshold_weak and xSpan ≥ xSpan_threshold_weak: weak cheek. ySpan is a longitudinal span, ySpan_threshold_weak is a fourth longitudinal span threshold, xSpan is a horizontal span, and xSpan_threshold_weak is a second horizontal span threshold. In other words, when the longitudinal span is greater than or equal to the fourth longitudinal span threshold, and the horizontal span is greater than or equal to the second horizontal span threshold, it is determined that the report point matching the capacitance hot spot is a report point generated by the weak cheek.

S ≥ S_threshold_weak_uncertain: uncertain. S is a hot spot area, and S_threshold_weak_uncertain is a third area threshold. In other words, when the hot spot area is greater than or equal to the third area threshold, it is determined that a result is uncertain.

ySpan ≥ ySpan_threshold_weak_uncertain: uncertain. ySpan is a longitudinal span, and ySpan_threshold_weak_uncertain is a fifth longitudinal span threshold. In other words, when the longitudinal span is greater than or equal to the fifth longitudinal span threshold, it is determined that a result is uncertain.

If none of the foregoing conditions is met, the capacitance hot spot area is determined as the non-weak cheek. In other words, when none of the foregoing conditions is met, it is determined that the report point matching the capacitance hot spot is a report point generated by the non-weak cheek.

Determining conditions of the ear: Check whether a capacitance hot spot is the ear by using the following conditions in an algorithm. If it is identified that the capacitance hot spot is the ear or the non-ear, no subsequent determining is performed; or if it is not identified that the capacitance hot spot is the ear or the non-ear, all cheeks are performed. In implementation of the algorithm, only a few of the conditions may be used for determining.

MaxCapacity < MaxCapacity_threshold_ear: non-ear. When the maximum capacitance value is less than a fourth capacitance threshold, it is determined that the report point matching the capacitance hot spot is a report point generated by the non-ear.

An axial direction of the ellipse is lower right, but the lower left shadow area leftDownShadowS ≥ leftDownShadowS_threshold_ear, or an axial direction of the ellipse is lower left, but the lower right shadow area rightDownShadowS ≥ rightDownShadowS_threshold_ear: the ear. When an axial direction of a major axis of the ellipse obtained from the first flooding area of the capacitance hot spot is lower right, and the lower left shadow area is greater than or equal to a fourth area threshold, or when an axial direction of a major axis of the ellipse obtained from the first flooding area of the capacitance hot spot is lower left, and the lower right shadow area is greater than or equal to a fifth area threshold, it is determined that the report point matching the capacitance hot spot is the report point generated by the ear.

S < S_threshold_ear: non-ear. S is a hot spot area, and S_threshold_ear is a sixth area threshold. In other words, when the hot spot area is less than the sixth area threshold, it is determined that a report point matching the capacitance hot spot is a report point generated by the non-ear.

The capacitance hot spot is attached to an upper edge, and ySpan ≤ ySpan_threshold_ear: the non-ear. ySpan is a longitudinal span, and ySpan_threshold_ear is a sixth longitudinal span threshold. In other words, when the capacitance hot spot is attached to an upper edge of a screen, and the longitudinal span is less than or equal to the sixth longitudinal span threshold, it is determined that the report point matching the capacitance hot spot is a report point generated by the non-ear.

e > e_threshold_ear and Gy > Gy_threshold_ear: the ear. e is a resistivity, e_threshold_ear is a first resistivity threshold, Gy is a vertical coordinate in a barycenter coordinate, and Gy_threshold_ear is a first coordinate threshold. In other words, when the resistivity is greater than the first resistivity threshold, and the vertical coordinate in the barycenter coordinate is greater than the first coordinate threshold, it is determined that the report point matching the capacitance hot spot is a report point generated by the ear.

e > e_threshold_ear_uncertain: uncertain. e is a resistivity, and e_threshold_ear_uncertain is a second resistivity threshold. In other words, when the resistivity is greater than the second resistivity threshold, it is determined that a result is uncertain.

If none of the foregoing conditions is met, the capacitance hot spot area is determined as the non-ear. In other words, when none of the foregoing conditions is met, it is determined that the report point matching the capacitance hot spot is the report point generated by the non-ear.

Determining conditions of a finger: referring to a schematic diagram of comparison between capacitance signals separately generated when the finger taps, and the ear and the cheek touch the screen shown in FIG. 6, if capacitance hot spots are separately determined as the non-strong cheek, the non-weak cheek, and the non-ear after the strong cheek determining, the weak cheek determining, and the ear determining, the capacitance hot spot area is determined as being normally tapped by the finger.

In an example, whether a report point is suppressed may be determined by determining whether the report point is in an odd-form state: some odd-form capacitance hot spots cannot be identified by determining only features. To improve an identification rate, in an example, the odd-form state is used to improve the identification rate. First, it is assumed that a user does not touch a screen with a finger to simultaneously perform operations such as tapping and sliding when making a call. Therefore, when there are a plurality of capacitance hot spots on the screen, if one capacitance hot spot is identified as the odd form, the capacitance hot spot is switched to the odd-form state. In the odd-form state, each subsequent capacitance hot spot continues to be determined whether the capacitance hot spot is the odd form, and if the capacitance hot spot is the odd form, the capacitance hot spot is added to an odd-form queue. However, regardless of whether the subsequent capacitance hot spot is determined as the odd form, reporting a report point corresponding to the subsequent capacitance hot spot is suppressed. When capacitance hot spots in all odd-form queues on the screen disappear, the algorithm exits from the odd-form state and does not suppress the report point. In other words, when there are a plurality of capacitance hot spots, it is determined that an odd-form touch occurs provided that one capacitance hot spot is determined as the capacitance hot spot generated by the odd-form touch, and report points corresponding to all capacitance hot spots are not reported.

In an example, determining is performed before a report point of a capacitance hot spot occurs: for each report point, a time in which the report point occurs at a first time is inconsistent with a time in which a capacitance hot spot corresponding to the report point occurs. A report point is usually reported after several frames after the capacitance hot spot appears. To improve an identification rate of the odd form, odd-form determining may be performed when a capacitance hot spot first appears, thereby increasing a quantity of times of determining. However, some capacitive touchscreens may cause relatively high noises, and may lead a mistaken determining when determining is performed before a report point occurs. As a result, a report point generated by a normal finger operation may be determined by mistake. Therefore, whether the capacitance hot spot is determined before a report point occurs may be adjusted based on a noise level of a capacitive touchscreen. It may be understood that, when a screen is touched, a capacitance hot spot signal is generated at a contact position, but a contact area is relatively small at the beginning and signal strength is relatively weak. As a result, a report point may not be reported at the beginning. A report point may be reported only when a hot spot meets a specific condition, for example, a maximum signal value in the capacitance hot spot exceeds a specific threshold. Therefore, determining is performed before the capacitance hot spot reports a report point can improve determining efficiency and have good user experience.

In an example, report point coordinate compensation is used after the determining is put off: when the report point falls at the top of the screen, if the report point cannot be determined as the normal tap in one frame, a policy of putting off reporting of the report point is used in several subsequent frames. When a report point is reported again after several frames are put off, a report point coordinate may be different from a coordinate in the first frame. For some controls that need to be started by sliding inward from an edge of the screen, that the reporting of the report point is put off may cause loss of report point information of previous several frames. If the report point coordinate is not in a corresponding starting hot area of the control after the reporting is put off, the control cannot be started. Therefore, when a start position of the report point falls in the edge position, the algorithm is used to record a coordinate of the first frame of the report point, and report the coordinate for compensation in the first frame of the report point after the reporting is put off. In this way, the control can be started normally.

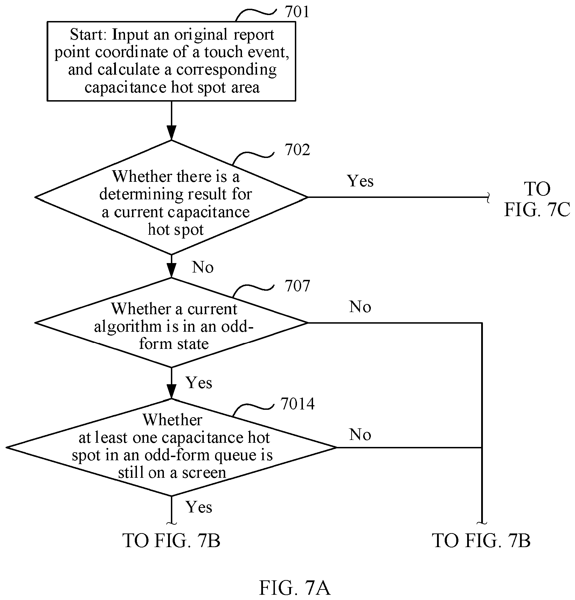

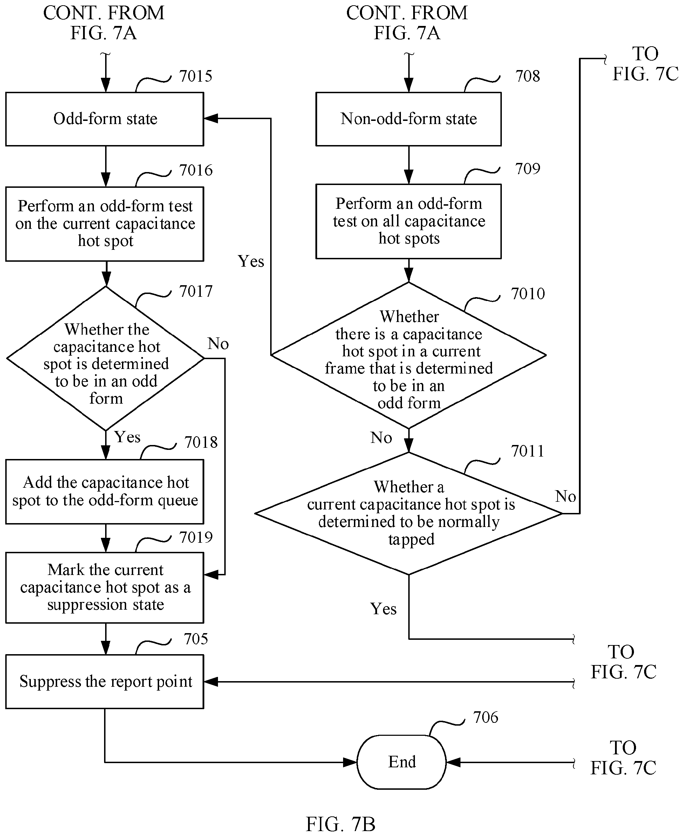

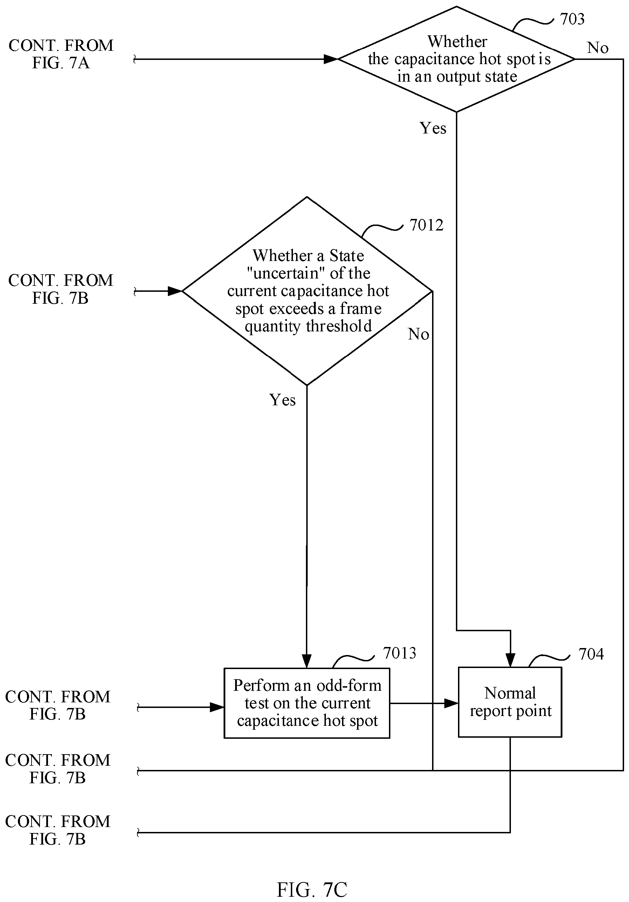

FIG. 7A, FIG. 7B, and FIG. 7C are a flowchart of another report point output control method according to an embodiment of the present invention. The method may be performed but is not limited to being performed by a mobile phone with a capacitive touchscreen, and the method includes the following steps:
Step 701: Input an original report point coordinate of a touch (Touch) event, and calculate a corresponding capacitance hot spot area.
Step 702: Determine whether there is a determining result for a current capacitance hot spot area.

If it is determined that there is a determining result for the current capacitance hot spot, step 703 is performed; or if it is determined that there is no determining result for the current capacitance hot spot, step 707 is performed.

Step 703: Determine whether the capacitance hot spot is in an output state.

If it is determined that the capacitance hot spot is in an output state, step 704 is performed; or if it is determined that the capacitance hot spot is not in an output state, step 705 is performed.

Step 704: A normal report point.

Step 705: Suppress the report point.

Step 706: End.

Step 707: Determine whether a current algorithm is in an odd-form state.

If it is determined that the current algorithm is not in an odd-form state, step 708 is performed; or if it is determined that the current algorithm is in an odd-form state, step 7014 is performed.

Step 708: Determine a non-odd-form state.

Step 709: Perform an odd-form test on all capacitance hot spots.

Step 7010: Determine whether there is a capacitance hot spot in a current frame that is determined to be in an odd form.

If it is determined that there is no capacitance hot spot in the current frame that is determined to be in an odd form, step 7011 is performed; or if it is determined that there is a capacitance hot spot in the current frame that is determined to be in an odd form, step 7015 is performed.

Step 7011: Determine whether a current capacitance hot spot is determined to be normally tapped.

If it is determined that the current capacitance hot spot is not determined to be normally tapped, step 7012 is performed; or if it is determined that the current capacitance hot spot is determined to be normally tapped, step 7013 is performed.

Step 7012: Determine whether a state "uncertain" of the current capacitance hot spot exceeds a frame quantity threshold.

If it is determined that the state "uncertain" of the current capacitance hot spot does not exceed the frame quantity threshold, step 7013 is performed; or if it is determined that the state "uncertain" of the current capacitance hot spot exceeds the frame quantity threshold, step 705 is performed.

Step 7013: Mark the current capacitance hot spot as an output state.

Step 704 is performed after step 7013.

Step 7014: Determine whether there is at least one capacitance hot spot in an odd-form queue that is still on a screen.

If it is determined that there is not at least one capacitance hot spot in the odd-form queue that is still on the screen, step 708 is performed; or if it is determined that there is the at least one capacitance hot spot in the odd-form queue that is still on the screen, step 7015 is performed.

Step 7015: Determine an odd-form state.

Step 7016: Perform an odd-form test on the current capacitance hot spot.

Step 7017: Determine whether the capacitance hot spot is determined to be in the odd form.

If it is determined that the capacitance hot spot is determined to be in the odd form, step 7018 is performed; or if it is determined that the capacitance hot spot is not determined to be in the odd form, step 7019 is performed.

Step 7018: Add the capacitance hot spot to the odd-form queue.

Step 7019: Mark the current capacitance hot spot as a suppression state.

Step 705 is performed after step 7019.

In this embodiment of the present invention, a plurality of manners are used in combination, so that report point accuracy can be improved, and processing efficiency can be improved.

The embodiments of the present invention further provide a report point output control apparatus. The apparatus is configured to perform the report point output control method provided in the foregoing embodiment of the present invention, and the apparatus may be integrated into a terminal with a capacitive touchscreen.

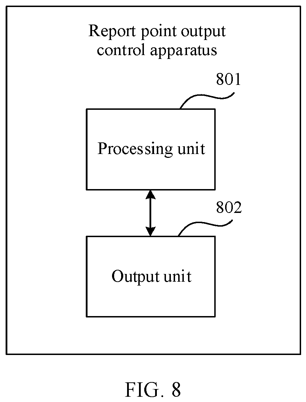

FIG. 8 is a structural diagram of a report point output control apparatus according to an embodiment of the present invention. The apparatus includes a processing unit 801 and an output unit 802.

The processing unit 801 is configured to: perform feature detection on a capacitance hot spot to determine at least one eigenvalue of the capacitance hot spot; determine, based on the at least one eigenvalue of the capacitance hot spot, whether a report point matching the capacitance hot spot is a report point generated by an odd-form touch; if it is determined that the report point is the report point generated by the odd-form touch, control the output unit 802 to skip outputting the report point, where the at least one eigenvalue includes at least one of a horizontal span, a longitudinal span, an eccentricity, a barycenter coordinate, a maximum capacitance value, an upper shadow length, a lower shadow length, a left shadow length, a right shadow length, an average shadow length, an upper left shadow area, a lower right shadow area, an upper right shadow area, and a lower left shadow area.

In an example, the processing unit 801 is further configured to: before performing feature detection on the capacitance hot spot to determine the at least one eigenvalue of the capacitance hot spot, obtain each frame of full-screen capacitance signals and a coordinate value of each report point in a report point set, where the report point set includes at least one report point; determine a capacitance hot spot set on a screen based on the full-screen capacitance signals, where the capacitance hot spot set includes at least one capacitance hot spot; and match the report point in the report point set against the capacitance hot spot in the capacitance hot spot set, to determine report point information corresponding to the capacitance hot spot.

In an example, the processing unit 801 is specifically configured to: determine at least one maximum value of capacitance signals on the screen based on the full-screen capacitance signals; start flooding from a capacitance grid corresponding to each maximum value, and add a capacitance grid whose capacitance signal is greater than a first capacitance threshold to a first flooding area of the capacitance hot spot; and start flooding from the capacitance grid corresponding to each maximum value, and add a capacitance grid whose capacitance signal is greater than a second capacitance threshold to a second flooding area of the capacitance hot spot, where the first capacitance threshold is greater than the second capacitance threshold, where each capacitance hot spot includes one first flooding area and one second flooding area.

In an example, the horizontal span is a horizontal span of the first flooding area of the capacitance hot spot; the longitudinal span is a longitudinal span of the first flooding area of the capacitance hot spot; the eccentricity is an eccentricity of an ellipse obtained by fitting the first flooding area of the capacitance hot spot; the barycenter coordinate is a barycenter coordinate of the first flooding area of the capacitance hot spot; the maximum capacitance value is a maximum capacitance value in the first flooding area of the capacitance hot spot; the upper shadow length is a length of the second flooding area at an upper position of the first flooding area of the capacitance hot spot in the longitudinal direction; the lower shadow length is a length of the second flooding area at a lower position of the first flooding area of the capacitance hot spot in the longitudinal direction; the left shadow length is a length of the second flooding area at a left position of the first flooding area of the capacitance hot spot in the horizontal direction; the right shadow length is a length of the second flooding area at a right position of the first flooding area of the capacitance hot spot in the horizontal direction; the average shadow length is an average length of the second flooding area around the first flooding area of the capacitance hot spot; the upper left shadow area is an area of the second flooding area at an upper left position of the first flooding area of the capacitance hot spot; the lower right shadow area is an area of the second flooding area at a lower right position of the first flooding area of the capacitance hot spot; the upper right shadow area is an area of the second flooding area at an upper right position of the first flooding area of the capacitance hot spot; and the lower left shadow area is an area of the second flooding area at a lower left position of the first flooding area of the capacitance hot spot.

In an example, the processing unit 801 is specifically configured to: determine, based on the at least one eigenvalue of the capacitance hot spot, whether the report point matching the capacitance hot spot is a report point generated by a strong cheek, where a determining result includes "strong cheek", "non-strong cheek", and "uncertain"; determine, based on the at least one eigenvalue of the capacitance hot spot, whether the report point matching the capacitance hot spot is a report point generated by a weak cheek, where a determining result includes "weak cheek", "non-weak cheek", and "uncertain"; determine, based on the at least one eigenvalue of the capacitance hot spot, whether the report point matching the capacitance hot spot is a report point generated by an ear, where a determining result includes "ear", "non-ear", and "uncertain"; and when the first determining result is "strong cheek", or when the second determining result is "weak cheek", or when the third determining result is "ear", determine that the report point is the report point generated by the odd-form touch; or when the first determining result is "non-strong cheek", the second determining result is "non-weak cheek", and the third determining result is "non-ear", determine that the report point is not the report point generated by the odd-form touch.

In an example, the at least one eigenvalue further includes a hot spot area, and the hot spot area is a quantity of capacitance grids in the first flooding area of the capacitance hot spot. The processing unit 801 is specifically configured to: when the hot spot area is less than a first area threshold, determine that the report point matching the capacitance hot spot is a report point generated by a non-strong cheek; or when the longitudinal span is greater than a first longitudinal span threshold, or when the average shadow length is greater than a first length threshold, or when the horizontal span is less than a first horizontal span threshold and the longitudinal span is greater than a second longitudinal span threshold, determine that the report point matching the capacitance hot spot is the report point generated by the strong cheek; or when the average shadow length is greater than a second length threshold, determine that a result is "uncertain"; or when none of the foregoing conditions is met, determine that the report point matching the capacitance hot spot is a report point generated by a non-strong cheek.

In an example, the at least one eigenvalue further includes a hot spot area, and the hot spot area is a quantity of capacitance grids in the first flooding area of the capacitance hot spot. The processing unit 801 is specifically configured to: when the maximum capacitance value is greater than or equal to a third capacitance threshold, or when the capacitance hot spot is attached to an upper edge of a screen and the longitudinal span is less than or equal to a third longitudinal span threshold, determine that the report point matching the capacitance hot spot is a report point generated by a non-weak cheek; or when the hot spot area is greater than or equal to a second area threshold, or when the longitudinal span is greater than or equal to a fourth longitudinal span threshold and the horizontal span is greater than or equal to a second horizontal span threshold, determine that the report point matching the capacitance hot spot is the report point generated by the weak cheek; or when the hot spot area is greater than or equal to a third area threshold, or when the longitudinal span is greater than or equal to a fifth longitudinal span threshold, determine that a result is "uncertain"; or when none of the foregoing conditions is met, determine that the report point matching the capacitance hot spot is a report point generated by a non-weak cheek.

In an example, the at least one eigenvalue further includes a hot spot area, and the hot spot area is a quantity of capacitance grids in the first flooding area of the capacitance hot spot. The processing unit 801 is specifically configured to: when the maximum capacitance value is less than a fourth capacitance threshold, determine that the report point matching the capacitance hot spot is a report point generated by a non-ear; or when an axial direction of a major axis of the ellipse obtained by fitting the first flooding area of the capacitance hot spot is lower right, and the lower left shadow area is greater than or equal to a fourth area threshold, or when an axial direction of a major axis of the ellipse obtained by fitting the first flooding area of the capacitance hot spot is lower left, and the lower right shadow area is greater than or equal to a fifth area threshold, determine that the report point matching the capacitance hot spot is the report point generated by the ear; or when the hot spot area is less than a sixth area threshold, or when the capacitance hot spot is attached to the upper edge of the screen and the longitudinal span is less than or equal to a sixth longitudinal span threshold, determine that the report point matching the capacitance hot spot is a report point generated by a non-ear; or when the resistivity is greater than a first resistivity threshold and a vertical coordinate in the barycenter coordinate is greater than a first coordinate threshold, determine that the report point matching the capacitance hot spot is the report point generated by the ear; or when the resistivity is greater than a second resistivity threshold, determine that a result is "uncertain"; or when none of the foregoing conditions is met, determine that the report point matching the capacitance hot spot is a report point generated by a non-ear.

In an example, the processing unit 801 is further configured to: when the first determining result, the second determining result, and the third determining result of a first frame are all "uncertain", store a coordinate of the report point of the first frame; and when determining, in a subsequent preset quantity of frames, that the report point is the report point generated by the odd-form touch, determine that the report point in the first frame is the report point generated by the odd-form touch; or when determining, in a subsequent preset quantity of frames, that the report point is not the report point generated by the odd-form touch, or when the first determining result, the second determining result, and the third determining result in the subsequent preset quantity of frames are all "uncertain", determine that the report point in the first frame is not the report point generated by the odd-form touch, and output the report point based on the coordinate of the report point of the first frame.

In an example, the capacitance hot spot set includes a plurality of capacitance hot spots. The processing unit 801 is further configured to: before determining, based on the at least one eigenvalue of the capacitance hot spot, whether the report point is the report point generated by the odd-form touch, determine whether a current state is an odd-form state; and if the current state is the odd-form state, determine that each report point corresponding to each capacitance hot spot in the plurality of capacitance hot spots is the report point generated by the odd-form touch; or if the current state is not the odd-form state, determine, based on the at least one eigenvalue of the capacitance hot spot, whether the report point is the report point generated by the odd-form touch; and when determining that the report point is the report point generated by the odd-form touch, switch the current state to the odd-form state.

In an example, the processing unit 801 is specifically configured to: perform feature detection on a capacitance hot spot that is in the capacitance hot spot set of a second frame and that does not match a report point in the report point set, to determine the at least one eigenvalue of the capacitance hot spot, where the second frame is a frame that meets a preset condition.

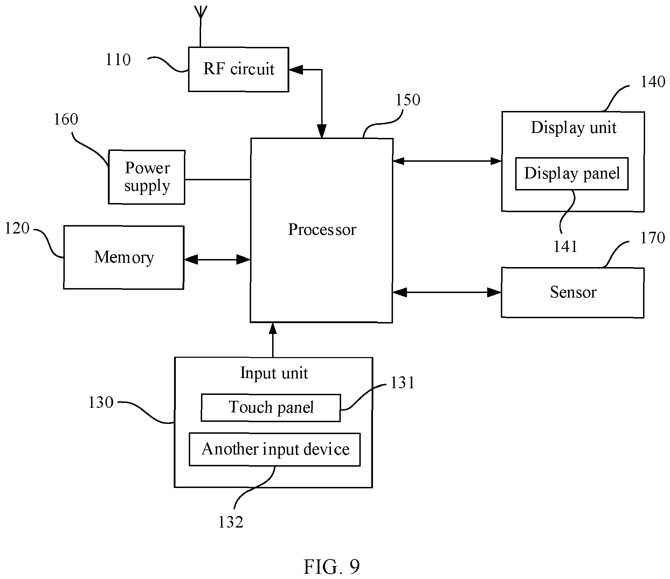

Referring to FIG. 9, the terminal provided in this embodiment of the present invention includes components such as a radio frequency (English: Radio Frequency, RF) circuit 110, a memory 120, an input unit 130, a display unit 140, a processor 150, a power supply 160, and a sensor 170. A person skilled in the art may understand that the structure of the terminal shown in FIG. 9 constitutes no limitation on the terminal. The terminal may include more or fewer components than those shown in the figure, and some components may be combined, or the components may be arranged in a different way.

The terminal provided in this embodiment of the present invention is configured to perform the report point output control method provided in the foregoing embodiment of the present invention. For corresponding features and descriptions, refer to content related to the foregoing method. Details are not described in this embodiment again.

The following specifically describes the components of the terminal with reference to FIG. 9.

The RF circuit 110 may be configured to: receive and send information, for example, exchange information with a device such as a server, and send the received information to the processor 150 for processing. Generally, the RF circuit 110 includes, but is not limited to, an antenna, at least one amplifier, a transceiver, a coupler, a low noise amplifier (English: Low Noise Amplifier, LNA), a duplexer, and the like. In addition, the RF circuit 110 may further communicate with a network and another device through wireless communication. The wireless communication may use any communications standard or protocol, including but not limited to: global system for mobile communications (English: Global System for Mobile communications, GSM), a general packet radio service (English: General Packet Radio Service, GPRS), code division multiple access (English: Code Division Multiple Access, CDMA), wideband code division multiple access (English: Wideband Code Division Multiple Access, WCDMA), long term evolution (English: Long Term Evolution, LTE), an email, a short message service (English: Short Message Service, SMS), and the like.

The storage 120 may be configured to store a software program and a module. The processor 150 runs the software program and the module that are stored in the storage 120, so that the terminal performs the foregoing report point output control method. The memory 120 may mainly include a program storage area and a data storage area. The program storage area may store an operating system, an application program required for implementing the foregoing report point output control method, and the like. The data storage area can store a configuration file of the application, and the like. In addition, the memory 120 may be a volatile memory (English: volatile memory), for example, a random-access memory (English: random-access memory, RAM for short); or the memory 120 may also be a non-volatile memory (English: non-volatile memory), for example, a read-only memory (English: read-only memory, ROM for short), a flash memory (English: flash memory), a hard disk drive (English: hard disk drive, HDD for short), or a solid-state drive (English: solid-state drive, SSD for short); or the memory 120 may further include a combination of the foregoing memories.

The input unit 130 may be configured to receive operation information such as digit or character information that is input by a user or a tap or slide of the user. Specifically, the input unit 130 may include a touch panel 131 and another input device 132. The touch panel 131, also referred to as a touchscreen, is a capacitive touchscreen in this embodiment of the present invention, and can collect a touch operation (for example, an operation performed by a user on the touch panel 131 or near the touch panel 131 by using any suitable object or accessory such as a finger or a stylus) performed by the user on or near the touch panel 131, and drive a corresponding connection apparatus according to a preset program. Optionally, the touch panel 131 may include two parts: a touch detection apparatus and a touch controller. The touch detection apparatus detects a touch location of the user, detects a signal brought by a touch operation, and delivers the signal to the touch controller. The touch controller receives touch information from the touch detection apparatus, converts the touch information into touch point coordinates, and sends the touch point coordinates to the processor 150. In addition, the touch controller can receive and execute a command sent by the processor 150. In addition, the input unit 130 may implement the touch panel 131 in a plurality of types, such as a resistive type, a capacitive type, an infrared ray, and a surface acoustic wave. In addition to the touch panel 131, the input unit 130 may further include another input device 132. Specifically, the another input device 132 may include, but is not limited to, one or more of a physical keyboard, a functional button (such as a sound volume control button or a power button), a trackball, a mouse, a joystick, and the like.

The display unit 140 may be configured to display information input by a user, information provided for a user, or the like. The display unit 140 may include a display panel 141. Optionally, the display panel 141 may be configured in a form of a liquid crystal display (English: Liquid Crystal Display, LCD), an organic light-emitting diode (English: Organic Light-Emitting Diode, OLED), or the like. Further, the touch panel 131 may cover the display panel 141. When detecting the touch operation on or near the touch panel 131, the touch panel 131 transmits the touch operation to the processor 150 to determine whether a report point is generated, and whether a report point is output, and then the processor 150 provides corresponding visual output on the display panel 141 based on a control corresponding to the report point. Although the touch panel 131 and the display panel 141 in FIG. 9 are used as two independent components to implement input and output functions of the terminal, in some embodiments, the touch panel 131 and the display panel 141 may be integrated to implement the input and output functions of the terminal device.

The processor 150 is a control center of the terminal, is connected to each part of the entire terminal by using various interfaces and lines, and performs the report point output control method by running or executing the software program and/or the module stored in the storage 120, and invoking data stored in the storage 120. Optionally, the processor 150 may include one or more processing units. Preferably, the processor 150 may integrate an application processor and a modem processor. The application processor mainly processes an operating system, a user interface, an application program, and the like. The modem processor mainly processes wireless communication. It may be understood that, alternatively, the modem processor may not be integrated into the processor 150.

The terminal further includes the power supply 160 (such as a battery) that supplies power to each component. Preferably, the power supply may be logically connected to the processor 150 by using a power supply management system, so that functions such as charging, discharging, and power consumption management are implemented by using the power supply management system.

The terminal further includes a sensor 170. The terminal may include one or more sensors. Only one sensor is drawn in the figure as an example. The terminal may include a plurality of types of sensors, including but not limited to a pressure sensor, a distance sensor, an acceleration sensor, a gyroscope sensor, a GPS sensor, a direction sensor, a temperature sensor, and the like. Different types of applications may use different sensors during operation.

The memory 120 is configured to store a program instruction.

The processor 150 is configured to perform the following operations based on the program instruction stored in the memory 120: performing feature detection on a capacitance hot spot to determine at least one eigenvalue of the capacitance hot spot; determining, based on the at least one eigenvalue of the capacitance hot spot, whether a report point matching the capacitance hot spot is a report point generated by an odd-form touch; if it is determined that the report point is the report point generated by the odd-form touch, skipping outputting the report point, where the at least one eigenvalue includes at least one of a horizontal span, a longitudinal span, an eccentricity, a barycenter coordinate, a maximum capacitance value, an upper shadow length, a lower shadow length, a left shadow length, a right shadow length, an average shadow length, an upper left shadow area, a lower right shadow area, an upper right shadow area, and a lower left shadow area.

In an example, before the processor 150 performs feature detection on the capacitance hot spot to determine the at least one eigenvalue of the capacitance hot spot, the processor 150 is further configured to perform the following operations based on the program instruction stored in the memory 120: obtaining each frame of full-screen capacitance signals and a coordinate value of each report point in a report point set, where the report point set includes at least one report point; determining a capacitance hot spot set on a screen based on the full-screen capacitance signals, where the capacitance hot spot set includes at least one capacitance hot spot; and matching the report point in the report point set against the capacitance hot spot in the capacitance hot spot set, to determine report point information corresponding to the capacitance hot spot.

In an example, that the processor 150 performs an operation of determining a capacitance hot spot set on a screen based on the full-screen capacitance signals includes: determining at least one maximum value of capacitance signals on the screen based on the full-screen capacitance signals; starting flooding from a capacitance grid corresponding to each maximum value, and adding a capacitance grid whose capacitance signal is greater than a first capacitance threshold to a first flooding area of the capacitance hot spot; and starting flooding from the capacitance grid corresponding to each maximum value, and adding a capacitance grid whose capacitance signal is greater than a second capacitance threshold to a second flooding area of the capacitance hot spot, where the first capacitance threshold is greater than the second capacitance threshold, where each capacitance hot spot includes one first flooding area and one second flooding area.

In an example, the horizontal span is a horizontal span of the first flooding area of the capacitance hot spot; the longitudinal span is a longitudinal span of the first flooding area of the capacitance hot spot; the eccentricity is an eccentricity of an ellipse obtained by fitting the first flooding area of the capacitance hot spot; the barycenter coordinate is a barycenter coordinate of the first flooding area of the capacitance hot spot; the maximum capacitance value is a maximum capacitance value in the first flooding area of the capacitance hot spot; the upper shadow length is a length of the second flooding area at an upper position of the first flooding area of the capacitance hot spot in the longitudinal direction; the lower shadow length is a length of the second flooding area at a lower position of the first flooding area of the capacitance hot spot in the longitudinal direction; the left shadow length is a length of the second flooding area at a left position of the first flooding area of the capacitance hot spot in the horizontal direction; the right shadow length is a length of the second flooding area at a right position of the first flooding area of the capacitance hot spot in the horizontal direction; the average shadow length is an average length of the second flooding area around the first flooding area of the capacitance hot spot; the upper left shadow area is an area of the second flooding area at an upper left position of the first flooding area of the capacitance hot spot; the lower right shadow area is an area of the second flooding area at a lower right position of the first flooding area of the capacitance hot spot; the upper right shadow area is an area of the second flooding area at an upper right position of the first flooding area of the capacitance hot spot; and the lower left shadow area is an area of the second flooding area at a lower left position of the first flooding area of the capacitance hot spot.

In an example, that the processor 150 performs an operation of determining, based on the at least one eigenvalue of the capacitance hot spot, whether a report point matching the capacitance hot spot is a report point generated by an odd-form touch includes: determining, based on the at least one eigenvalue of the capacitance hot spot, whether the report point matching the capacitance hot spot is a report point generated by a strong cheek, where a determining result includes "strong cheek", "non-strong cheek", and "uncertain"; determining, based on the at least one eigenvalue of the capacitance hot spot, whether the report point matching the capacitance hot spot is a report point generated by a weak cheek, where a determining result includes "weak cheek", "non-weak cheek", and "uncertain"; determining, based on the at least one eigenvalue of the capacitance hot spot, whether the report point matching the capacitance hot spot is a report point generated by an ear, where a determining result includes "ear", "non-ear", and "uncertain"; and when the first determining result is "strong cheek", or when the second determining result is "weak cheek", or when the third determining result is "ear", determining that the report point is the report point generated by the odd-form touch; or when the first determining result is "non-strong cheek", the second determining result is "non-weak cheek", and the third determining result is "non-ear", determining that the report point is not the report point generated by the odd-form touch.

In an example, the at least one eigenvalue further includes a hot spot area, and the hot spot area is a quantity of capacitance grids in the first flooding area of the capacitance hot spot; and that the processor 150 performs an operation of determining, based on the at least one eigenvalue of the capacitance hot spot, whether the report point matching the capacitance hot spot is a report point generated by a strong cheek includes: when the hot spot area is less than a first area threshold, determining that the report point matching the capacitance hot spot is a report point generated by a non-strong cheek; or when the longitudinal span is greater than a first longitudinal span threshold, or when the average shadow length is greater than a first length threshold, or when the horizontal span is less than a first horizontal span threshold and the longitudinal span is greater than a second longitudinal span threshold, determining that the report point matching the capacitance hot spot is the report point generated by the strong cheek; or when the average shadow length is greater than a second length threshold, determining that a result is "uncertain"; or when none of the foregoing conditions is met, determining that the report point matching the capacitance hot spot is a report point generated by a non-strong cheek.

In an example, the at least one eigenvalue further includes a hot spot area, and the hot spot area is a quantity of capacitance grids in the first flooding area of the capacitance hot spot; and that the processor 150 performs an operation of determining, based on the at least one eigenvalue of the capacitance hot spot, whether the report point matching the capacitance hot spot is a report point generated by a weak cheek includes: when the maximum capacitance value is greater than or equal to a third capacitance threshold, or when the capacitance hot spot is attached to an upper edge of a screen and the longitudinal span is less than or equal to a third longitudinal span threshold, determining that the report point matching the capacitance hot spot is a report point generated by a non-weak cheek; or when the hot spot area is greater than or equal to a second area threshold, or when the longitudinal span is greater than or equal to a fourth longitudinal span threshold and the horizontal span is greater than or equal to a second horizontal span threshold, determining that the report point matching the capacitance hot spot is the report point generated by the weak cheek; or when the hot spot area is greater than or equal to a third area threshold, or when the longitudinal span is greater than or equal to a fifth longitudinal span threshold, determining that a result is "uncertain"; or when none of the foregoing conditions is met, determining that the report point matching the capacitance hot spot is a report point generated by a non-weak cheek.

In an example, the at least one eigenvalue further includes a hot spot area, and the hot spot area is a quantity of capacitance grids in the first flooding area of the capacitance hot spot; and that the processor 150 performs an operation of determining, based on the at least one eigenvalue of the capacitance hot spot, whether the report point matching the capacitance hot spot is a report point generated by an ear includes: when the maximum capacitance value is less than a fourth capacitance threshold, determining that the report point matching the capacitance hot spot is a report point generated by a non-ear; or when an axial direction of a major axis of the ellipse obtained by fitting the first flooding area of the capacitance hot spot is lower right, and the lower left shadow area is greater than or equal to a fourth area threshold, or when an axial direction of a major axis of the ellipse obtained by fitting the first flooding area of the capacitance hot spot is lower left, and the lower right shadow area is greater than or equal to a fifth area threshold, determining that the report point matching the capacitance hot spot is the report point generated by the ear; or when the hot spot area is less than a sixth area threshold, or when the capacitance hot spot is attached to the upper edge of the screen and the longitudinal span is less than or equal to a sixth longitudinal span threshold, determining that the report point matching the capacitance hot spot is a report point generated by a non-ear; or when the resistivity is greater than a first resistivity threshold and a vertical coordinate in the barycenter coordinate is greater than a first coordinate threshold, determining that the report point matching the capacitance hot spot is the report point generated by the ear; or when the resistivity is greater than a second resistivity threshold, determining that a result is "uncertain"; or when none of the foregoing conditions is met, determining that the report point matching the capacitance hot spot is a report point generated by a non-ear.

In an example, the processor 150 is further configured to perform the following operations based on the program instruction stored in the memory 120: when the first determining result, the second determining result, and the third determining result of a first frame are all "uncertain", storing a coordinate of the report point of the first frame; and when it is determined, in a subsequent preset quantity of frames, that the report point is the report point generated by the odd-form touch, determining that the report point in the first frame is the report point generated by the odd-form touch; or when it is determined, in a subsequent preset quantity of frames, that the report point is not the report point generated by the odd-form touch, or when the first determining result, the second determining result, and the third determining result in the subsequent preset quantity of frames are all "uncertain", determining that the report point in the first frame is not the report point generated by the odd-form touch, and outputting the report point based on the coordinate of the report point of the first frame.

In an example, the capacitance hot spot set includes a plurality of capacitance hot spots; and before the processor 150 performs an operation of determining, based on the at least one eigenvalue of the capacitance hot spot, whether the report point is a report point generated by an odd-form touch, the processor 150 is further configured to perform the following operations based on the program instruction stored in the memory 120: determining whether a current state is an odd-form state; and if the current state is the odd-form state, determining that each report point corresponding to each capacitance hot spot in the plurality of capacitance hot spots is the report point generated by the odd-form touch; or if the current state is not the odd-form state, determining, based on the at least one eigenvalue of the capacitance hot spot, whether the report point is the report point generated by the odd-form touch; and when it is determined that the report point is the report point generated by the odd-form touch, switching the current state to the odd-form state.

In an example, that the processor 150 performs an operation of performing feature detection on a capacitance hot spot to determine at least one eigenvalue of the capacitance hot spot includes: performing feature detection on a capacitance hot spot that is in the capacitance hot spot set of a second frame and that does not match a report point in the report point set, to determine the at least one eigenvalue of the capacitance hot spot, where the second frame is a frame that meets a preset condition.

Although not shown in the figure, the terminal may further include a camera, a Bluetooth module, an audio circuit, a USB module, and the like. Details are not described herein.

In this embodiment of the present invention, the processor 150 determines, based on the at least one eigenvalue of the capacitance hot spot, whether the report point matching the capacitance hot spot is the report point generated by the odd-form touch, where the at least one eigenvalue includes at least one of a horizontal span, a longitudinal span, an eccentricity, a barycenter coordinate, a maximum capacitance value, an average shadow length, an upper left shadow area, and a lower right shadow area. One or more capacitance features such as a shape, a scale, a size, an amplitude, a time-varying trend, and the like of a capacitance data change at the bottom of the screen are processed, so as to prevent a mistaken edge touch, and optimally ensure that a normal edge operation is not affected.

In addition, the display unit 140 in the terminal shown in FIG. 9 may be corresponding to the output unit 802 of the terminal in FIG. 8; and the input unit 130 and the processor 150 may be corresponding to the processing unit 801 in FIG. 8. Details are not described herein.

A person of ordinary skill in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

A person of ordinary skill in the art may understand that all or some of the steps in each of the foregoing method of the embodiments may be implemented by a program instructing a processor. The foregoing program may be stored in a computer readable storage medium. The storage medium may be a non-transitory (non-transitory) medium, for example may be a random-access memory, read-only memory, a flash memory, a hard disk, a solid state drive, a magnetic tape (magnetic tape), a floppy disk (floppy disk), an optical disc (optical disc), or any combination thereof.

## Claims

1. A report point output control method, wherein the method comprises:
obtaining a frame of full-screen capacitance signals and a coordinate value of each report point in a report point set, wherein the report point set comprises a plurality of report points, wherein the capacitance signals are generated by a capacitive touchscreen;
determining a capacitance hot spot set on the capacitive touchscreen based on the full-screen capacitance signals, wherein the capacitance hot spot set comprises a plurality of capacitance hot spots, wherein the determining a capacitance hot spot set on a screen based on the full-screen capacitance signals comprises:
determining at least one maximum value of capacitance signals on the screen based on the full-screen capacitance signals;
starting flooding from a capacitance grid corresponding to each maximum value, and adding a capacitance grid whose capacitance signal is greater than a first capacitance threshold to a first flooding area of the capacitance hot spot; and
starting flooding from the capacitance grid corresponding to each maximum value, and adding a capacitance grid whose capacitance signal is greater than a second capacitance threshold to a second flooding area of the capacitance hot spot, wherein the first capacitance threshold is greater than the second capacitance threshold, wherein
each capacitance hot spot comprises one first flooding area and one second flooding area;
matching each report point in the report point set against a capacitance hot spot in the capacitance hot spot set, to determine report point information corresponding to each capacitance hot spot;
performing (101), feature detection on a capacitance hot spot in the capacitance hot spot set to determine at least one eigenvalue of the capacitance hot spot;
determining (707) whether a current state of the capacitance hot spot on which feature detection is performed is an odd-form state;
when the current state of the capacitance hot spot on which feature detection is performed is the odd-form state, determining that each report point corresponding to each capacitance hot spot in the plurality of capacitance hot spots is the report point generated by an odd-form touch;
when the current state is not the odd-form state, determining (102), based on the at least one eigenvalue of the capacitance hot spot on which feature detection is performed, whether the report point matching the capacitance hot spot is a report point generated by an odd-form touch, wherein an odd-form touch corresponds to at least one of: a cheek sticking to the capacitive touchscreen, a cheek touching the capacitive touchscreen, and an ear touching the capacitive touchscreen; and
when it is determined that the report point is the report point generated by the odd-form touch, switching the current state of the capacitance hot spot on which feature detection is performed to the odd-form state and skipping (103) outputting the report point, wherein
the at least one eigenvalue comprises at least one of a horizontal span, a longitudinal span, an eccentricity, a barycenter coordinate, a maximum capacitance value, an upper shadow length, a lower shadow length, a left shadow length, a right shadow length, an average shadow length, an upper left shadow area, a lower right shadow area, an upper right shadow area, and a lower left shadow area,
wherein
the horizontal span is a horizontal span of the first flooding area of the capacitance hot spot;
the longitudinal span is a longitudinal span of the first flooding area of the capacitance hot spot;
the eccentricity is an eccentricity of an ellipse obtained by fitting the first flooding area of the capacitance hot spot;
the barycenter coordinate is a barycenter coordinate of the first flooding area of the capacitance hot spot;
the maximum capacitance value is a maximum capacitance value in the first flooding area of the capacitance hot spot;
the upper shadow length is a length of the second flooding area at an upper position of the first flooding area of the capacitance hot spot in the longitudinal direction;
the lower shadow length is a length of the second flooding area at a lower position of the first flooding area of the capacitance hot spot in the longitudinal direction;
the left shadow length is a length of the second flooding area at a left position of the first flooding area of the capacitance hot spot in the horizontal direction;
the right shadow length is a length of the second flooding area at a right position of the first flooding area of the capacitance hot spot in the horizontal direction;
the average shadow length is an average length of the second flooding area around the first flooding area of the capacitance hot spot;
the upper left shadow area is an area of the second flooding area at an upper left position of the first flooding area of the capacitance hot spot;
the lower right shadow area is an area of the second flooding area at a lower right position of the first flooding area of the capacitance hot spot;
the upper right shadow area is an area of the second flooding area at an upper right position of the first flooding area of the capacitance hot spot; and
the lower left shadow area is an area of the second flooding area at a lower left position of the first flooding area of the capacitance hot spot;
wherein, the determining, based on the at least one eigenvalue of the capacitance hot spot, whether a report point matching the capacitance hot spot is a report point generated by an odd-form touch comprises:
determining, based on the at least one eigenvalue of the capacitance hot spot, whether the report point matching the capacitance hot spot is a report point generated by a cheek sticking to the screen, wherein a first determining result comprises "strong cheek", "non-strong cheek", and "uncertain";
determining, based on the at least one eigenvalue of the capacitance hot spot, whether the report point matching the capacitance hot spot is a report point generated by a cheek touching the screen, wherein a second determining result comprises "weak cheek", "non-weak cheek", and "uncertain";
determining, based on the at least one eigenvalue of the capacitance hot spot, whether the report point matching the capacitance hot spot is a report point generated by an ear touching the screen, wherein a third determining result comprises "ear", "non-ear", and "uncertain"; and
when the first determining result is "strong cheek", or when the second determining result is "weak cheek", or when the third determining result is "ear", determining that the report point is the report point generated by the odd-form touch; or
when the first determining result is "non-strong cheek", the second determining result is "non-weak cheek", and the third determining result is "non-ear", determining that the report point is not the report point generated by the odd-form touch,
when the first determining result, the second determining result, and the third determining result of a first frame are all "uncertain", storing a coordinate of the report point of the first frame;
when it is determined, in a subsequent preset quantity of frames, that the report point is the report point generated by the odd-form touch, determining that the report point in the first frame is the report point generated by the odd-form touch; and
when it is determined, in a subsequent preset quantity of frames, that the report point is not the report point generated by the odd-form touch, or when the first determining result, the second determining result, and the third determining result in the subsequent preset quantity of frames are all "uncertain", determining that the report point in the first frame is not the report point generated by the odd-form touch, and outputting the report point based on the coordinate of the report point of the first frame.

2. The method according to claim 1, wherein the at least one eigenvalue further comprises a hot spot area, and the hot spot area is a quantity of capacitance grids in the first flooding area of the capacitance hot spot; and
the determining, based on the at least one eigenvalue of the capacitance hot spot, whether the report point matching the capacitance hot spot is a report point generated by a cheek sticking to the screen comprises:
when the hot spot area is less than a first area threshold, determining that the report point matching the capacitance hot spot is a report point generated by a non-strong cheek; or
when the longitudinal span is greater than a first longitudinal span threshold, or when the average shadow length is greater than a first length threshold, or when the horizontal span is less than a first horizontal span threshold and the longitudinal span is greater than a second longitudinal span threshold, determining that the report point matching the capacitance hot spot is the report point generated by the cheek sticking to the screen; or
when the average shadow length is greater than a second length threshold, determining that a result is "uncertain"; or
when none of the foregoing conditions is met, determining that the report point matching the capacitance hot spot is a report point generated by a non-strong cheek.

3. The method according to any of claims 1 to 2, wherein the at least one eigenvalue further comprises a hot spot area, and the hot spot area is a quantity of capacitance grids in the first flooding area of the capacitance hot spot; and
the determining, based on the at least one eigenvalue of the capacitance hot spot, whether the report point matching the capacitance hot spot is a report point generated by a cheek touching the screen comprises:
when the maximum capacitance value is greater than or equal to a third capacitance threshold, or when the capacitance hot spot is attached to an upper edge of a screen and the longitudinal span is less than or equal to a third longitudinal span threshold, determining that the report point matching the capacitance hot spot is a report point generated by a non-weak cheek; or
when the hot spot area is greater than or equal to a second area threshold, or when the longitudinal span is greater than or equal to a fourth longitudinal span threshold and the horizontal span is greater than or equal to a second horizontal span threshold, determining that the report point matching the capacitance hot spot is the report point generated by the cheek touching the screen; or
when the hot spot area is greater than or equal to a third area threshold, or when the longitudinal span is greater than or equal to a fifth longitudinal span threshold, determining that a result is "uncertain"; or
when none of the foregoing conditions is met, determining that the report point matching the capacitance hot spot is a report point generated by a non-weak cheek.

4. The method according to any one of claims 1 to 3, wherein the at least one eigenvalue further comprises a hot spot area, and the hot spot area is a quantity of capacitance grids in the first flooding area of the capacitance hot spot; and
the determining, based on the at least one eigenvalue of the capacitance hot spot, whether the report point matching the capacitance hot spot is a report point generated by an ear touching the screen comprises:
when the maximum capacitance value is less than a fourth capacitance threshold, determining that the report point matching the capacitance hot spot is a report point generated by a non-ear; or
when an axial direction of a major axis of the ellipse obtained by fitting the first flooding area of the capacitance hot spot is lower right, and the lower left shadow area is greater than or equal to a fourth area threshold, or when an axial direction of a major axis of the ellipse obtained by fitting the first flooding area of the capacitance hot spot is lower left, and the lower right shadow area is greater than or equal to a fifth area threshold, determining that the report point matching the capacitance hot spot is the report point generated by the ear touching the screen; or
when the hot spot area is less than a sixth area threshold, or when the capacitance hot spot is attached to the upper edge of the screen and the longitudinal span is less than or equal to a sixth longitudinal span threshold, determining that the report point matching the capacitance hot spot is a report point generated by a non-ear; or
when the resistivity is greater than a first resistivity threshold and a vertical coordinate in the barycenter coordinate is greater than a first coordinate threshold, determining that the report point matching the capacitance hot spot is the report point generated by the ear; or
when the resistivity is greater than a second resistivity threshold, determining that a result is "uncertain"; or
when none of the foregoing conditions is met, determining that the report point matching the capacitance hot spot is a report point generated by a non-ear.

5. The method according to any one of claims 1 to 4, wherein the performing feature detection on a capacitance hot spot to determine at least one eigenvalue of the capacitance hot spot comprises:
performing feature detection on a capacitance hot spot that is in the capacitance hot spot set of a second frame and that does not match a report point in the report point set, to determine the at least one eigenvalue of the capacitance hot spot, wherein the second frame is a frame that meets a preset condition.

6. A report point output control apparatus, wherein the apparatus comprises a memory (102), a capacitive touchscreen and a processor (150), wherein
the memory is configured to store a program instruction;
the processor is configured to perform the method according to any one of claims 1 to 5 based on the program instruction stored in the memory; and
the capacitive touchscreen is configured to generate a plurality of capacitance signals, so that the processor can determine a report point set and a capacitance hot spot set based on the capacitance signals.

7. A computer readable storage medium storing a program, wherein the program comprises an instruction, and when the instruction is executed by a terminal, the terminal is enabled to perform the method according to any one of claims 1 to 5.

8. A computer program product comprising an instruction, wherein when the computer program product is run on a computer, the computer is enabled to perform the method according to any one of claims 1 to 5.

## Patentansprüche

1. Berichtspunktausgabesteuerungsverfahren, wobei das Verfahren Folgendes umfasst:
Erlangen eines Frames von Vollbild-Kapazitätssignalen und eines Koordinatenwerts jedes Berichtspunkts in einem Berichtspunktsatz, wobei der Berichtspunktsatz eine Vielzahl von Berichtspunkten umfasst, wobei die Kapazitätssignale von einem kapazitiven Touchscreen generiert werden;
Bestimmen eines Kapazitäts-Hot-Spot-Satzes auf dem kapazitiven Touchscreen auf Grundlage der Vollbild-Kapazitätssignale, wobei der Kapazitäts-Hot-Spot-Satz eine Vielzahl von Kapazitäts-Hot-Spots umfasst, wobei das Bestimmen eines Kapazitäts-Hot-Spot-Satzes auf einem Bildschirm auf Grundlage der Vollbild-Kapazitätssignale Folgendes umfasst:
Bestimmen mindestens eines Maximalwerts von Kapazitätssignalen auf dem Bildschirm auf Grundlage der Vollbild-Kapazitätssignale; Starten eines Floodings von einem Kapazitätsraster, das jedem Maximalwert entspricht, und Hinzufügen eines Kapazitätsrasters, dessen Kapazitätssignal größer als ein erster Kapazitätsschwellenwert ist, zu einem ersten Flooding-Bereich des Kapazitäts-Hot-Spots; und
Starten des Floodings von dem Kapazitätsraster, das jedem Maximalwert entspricht, und Hinzufügen eines Kapazitätsrasters, dessen Kapazitätssignal größer als ein zweiter Kapazitätsschwellenwert ist, zu einem zweiten Flooding-Bereich des Kapazitäts-Hot-Spots, wobei der erste Kapazitätsschwellenwert größer als der zweite Kapazitätsschwellenwert ist, wobei
jeder Kapazitäts-Hot-Spot einen ersten Flooding-Bereich und einen zweiten Flooding-Bereich umfasst;
Abgleichen jedes Berichtspunkts in dem Berichtspunktsatz mit einem Kapazitäts-Hot-Spot in dem Kapazitäts-Hot-Spot-Satz, um Berichtspunktinformationen zu bestimmten, die jedem Kapazitäts-Hot-Spot entsprechen;
Durchführen (101) einer Merkmalserkennung an einem Kapazitäts-Hot-Spot in dem Kapazitäts-Hot-Spot-Satz, um mindestens einen Eigenwert des Kapazitäts-Hot-Spots zu bestimmen;
Bestimmen (707), ob ein aktueller Zustand des Kapazitäts-Hot-Spots, an dem die Merkmalserkennung durchgeführt wird, ein Zustand ungerader Form ist;
wenn der aktuelle Zustand des Kapazitäts-Hot-Spots, an dem die Merkmalserkennung durchgeführt wird, der Zustand ungerader Form ist, Bestimmen, dass jeder Berichtspunkt, der jedem Kapazitäts-Hot-Spot in der Vielzahl von Kapazitäts-Hot-Spots entspricht, der durch eine Berührung ungerader Form generierte Berichtspunkt ist;
wenn der aktuelle Zustand nicht der Zustand ungerader Form ist, Bestimmen (102), ob der Berichtspunkt, der mit dem Kapazitäts-Hot-Spot abgeglichen ist, ein durch eine Berührung ungerader Form generierter Berichtspunkt ist, auf Grundlage des mindestens einen Eigenwerts des Kapazitäts-Hot-Spots, an dem die Merkmalserkennung durchgeführt wird, wobei eine Berührung ungerader Form mindestens einem der Folgenden entspricht: eine Wange haftet an dem kapazitiven Touchscreen an, eine Wange berührt den kapazitiven Touchscreen und ein Ohr berührt den kapazitiven Touchscreen; und
wenn bestimmt wird, dass der Berichtspunkt der durch die Berührung ungerader Form generierte Berichtspunkt ist, Umschalten des aktuellen Zustands des Kapazitäts-Hot-Spots, an dem die Merkmalserkennung durchgeführt wird, auf den Zustand ungerader Form und Überspringen (103) des Ausgebens des Berichtspunkts, wobei
der mindestens eine Eigenwert mindestens eines von Folgenden umfasst: einer Horizontalspannweite, einer Längsspannweite, einer Exzentrizität, einer Schwerpunktkoordinate, einem maximalen Kapazitätswert, einer oberen Schattenlänge, einer unteren Schattenlänge, einer linken Schattenlänge, einer rechten Schattenlänge, einer durchschnittlichen Schattenlänge, einem oberen linken Schattenbereich, einem unteren rechten Schattenbereich, einem oberen rechten Schattenbereich und einem unteren linken Schattenbereich,
wobei
die Horizontalspannweite eine Horizontalspannweite des ersten Flooding-Bereichs des Kapazitäts-Hot-Spots ist;
die Längsspannweite eine Längsspannweite des ersten Flooding-Bereichs des Kapazitäts-Hot-Spots ist;
die Exzentrizität eine Exzentrizität einer Ellipse ist, die durch Anpassen des ersten Flooding-Bereichs des Kapazitäts-Hot-Spots erlangt wird;
die Schwerpunktkoordinate eine Schwerpunktkoordinate des ersten Flooding-Bereichs des Kapazitäts-Hot-Spots ist;
der maximale Kapazitätswert ein maximaler Kapazitätswert in dem ersten Flooding-Bereich des Kapazitäts-Hot-Spots ist;
die obere Schattenlänge eine Länge des zweiten Flooding-Bereichs an einer oberen Position des ersten Flooding-Bereichs des Kapazitäts-Hot-Spots in der Längsrichtung ist;
die untere Schattenlänge eine Länge des zweiten Flooding-Bereichs an einer unteren Position des ersten Flooding-Bereichs des Kapazitäts-Hot-Spots in der Längsrichtung ist;
die linke Schattenlänge eine Länge des zweiten Flooding-Bereichs an einer linken Position des ersten Flooding-Bereichs des Kapazitäts-Hot-Spots in der Horizontalrichtung ist;
die rechte Schattenlänge eine Länge des zweiten Flooding-Bereichs an einer rechten Position des ersten Flooding-Bereichs des Kapazitäts-Hot-Spots in der Horizontalrichtung ist;
die durchschnittliche Schattenlänge eine durchschnittliche Länge des zweiten Flooding-Bereichs um den ersten Flooding-Bereich des Kapazitäts-Hot-Spots ist;
der obere linke Schattenbereich ein Bereich des zweiten Flooding-Bereichs an einer oberen linken Position des ersten Flooding-Bereichs des Kapazitäts-Hot-Spots ist;
der untere rechte Schattenbereich ein Bereich des zweiten Flooding-Bereichs an einer unteren rechten Position des ersten Flooding-Bereichs des Kapazitäts-Hot-Spots ist;
der obere rechte Schattenbereich ein Bereich des zweiten Flooding-Bereichs an einer oberen rechten Position des ersten Flooding-Bereichs des Kapazitäts-Hot-Spots ist; und
der untere linke Schattenbereich ein Bereich des zweiten Flooding-Bereichs an einer unteren linken Position des ersten Flooding-Bereichs des Kapazitäts-Hot-Spots ist;
wobei das Bestimmen, ob ein Berichtspunkt, der mit dem Kapazitäts-Hot-Spot abgeglichen ist, ein durch eine Berührung ungerader Form generierter Berichtspunkt ist, auf Grundlage des mindestens einen Eigenwerts des Kapazitäts-Hot-Spots Folgendes umfasst:
Bestimmen, ob der Berichtspunkt, der mit dem Kapazitäts-Hot-Spot abgeglichen ist, ein durch eine an dem Bildschirm anhaftende Wange generierter Berichtspunkt ist, auf Grundlage des mindestens einen Eigenwerts des Kapazitäts-Hot-Spots, wobei ein erstes Bestimmungsergebnis "starke Wange", "nicht starke Wange" und "unsicher" umfasst;
Bestimmen, ob der Berichtspunkt, der mit dem Kapazitäts-Hot-Spot abgeglichen ist, ein durch eine den Bildschirm berührende Wange generierter Berichtspunkt ist, auf Grundlage des mindestens einen Eigenwerts des Kapazitäts-Hot-Spots, wobei ein zweites Bestimmungsergebnis "schwache Wange", "nicht schwache Wange" und "unsicher" umfasst;
Bestimmen, ob der Berichtspunkt, der mit dem Kapazitäts-Hot-Spot abgeglichen ist, ein durch ein den Bildschirm berührendes Ohr generierter Berichtspunkt ist, auf Grundlage des mindestens einen Eigenwerts des Kapazitäts-Hot-Spots, wobei ein drittes Bestimmungsergebnis "Ohr", "kein Ohr" und "unsicher" umfasst; und
wenn das erste Bestimmungsergebnis "starke Wange" ist oder wenn das zweite Bestimmungsergebnis "schwache Wange" ist oder wenn das dritte Bestimmungsergebnis "Ohr" ist, Bestimmen, dass der Berichtspunkt der durch die Berührung ungerader Form generierte Berichtspunkt ist; oder
wenn das erste Bestimmungsergebnis "nicht starke Wange" ist, das zweite Bestimmungsergebnis "nicht schwache Wange" ist und das dritte Bestimmungsergebnis "kein Ohr" ist, Bestimmen, dass der Berichtspunkt nicht der durch die Berührung ungerader Form generierte Berichtspunkt ist,
wenn das erste Bestimmungsergebnis, das zweite Bestimmungsergebnis und das dritte Bestimmungsergebnis eines ersten Frames alle "unsicher" sind, Speichern einer Koordinate des Berichtspunkts des ersten Frames;
wenn in einer nachfolgenden voreingestellten Anzahl von Frames bestimmt wird, dass der Berichtspunkt der durch die Berührung ungerader Form generierte Berichtspunkt ist, Bestimmen, dass der Berichtspunkt in dem ersten Frame der durch die Berührung ungerader Form generierte Berichtspunkt ist; und
wenn in einer nachfolgenden voreingestellten Anzahl von Frames bestimmt wird, dass der Berichtspunkt nicht der durch die Berührung ungerader Form generierte Berichtspunkt ist, oder wenn das erste Bestimmungsergebnis, das zweite Bestimmungsergebnis und das dritte Bestimmungsergebnis in der nachfolgenden voreingestellten Anzahl von Frames alle "unsicher" sind, Bestimmen, dass der Berichtspunkt in dem ersten Frame nicht der durch die Berührung ungerader Form generierte Berichtspunkt ist, und Ausgeben des Berichtspunkts auf Grundlage der Koordinate des Berichtspunkts des ersten Frames.

2. Verfahren nach Anspruch 1, wobei der mindestens eine Eigenwert ferner einen Hot-Spot-Bereich umfasst und der Hot-Spot-Bereich eine Anzahl von Kapazitätsrastern in dem ersten Flooding-Bereich des Kapazität-Hot-Spots ist; und
das Bestimmen, ob der Berichtspunkt, der mit dem Kapazitäts-Hot-Spot abgeglichen ist, ein durch eine an dem Bildschirm anhaftende Wange generierter Berichtspunkt ist, auf Grundlage des mindestens einen Eigenwerts des Kapazitäts-Hot-Spots Folgendes umfasst:
wenn der Hot-Spot-Bereich kleiner als ein erster Bereichsschwellenwert ist, Bestimmen, dass der Berichtspunkt, der mit der Kapazitäts-Hot-Spot abgeglichen ist, ein durch eine nicht starke Wange generierter Berichtspunkt ist; oder
wenn die Längsspannweite größer als ein erster Längsspannweitenschwellenwert ist oder wenn die durchschnittliche Schattenlänge größer als ein erster Längenschwellenwert ist oder wenn die Horizontalspannweite kleiner als ein erster Horizontalspannweitenschwellenwert ist und die Längsspannweite größer als ein zweiter Längsspannweitenschwellenwert ist, Bestimmen, dass der Berichtspunkt, der mit dem Kapazitäts-Hot-Spot abgeglichen ist, der durch die an dem Bildschirm anhaftende Wange generierte Berichtspunkt ist; oder
wenn die durchschnittliche Schattenlänge größer als ein zweiter Längenschwellenwert ist, Bestimmen, dass ein Ergebnis "unsicher" ist; oder
wenn keine der vorangehenden Bedingungen erfüllt ist, Bestimmen, dass der Berichtspunkt, der mit dem Kapazitäts-Hot-Spot abgeglichen ist, ein durch eine nicht starke Wange generierter Berichtspunkt ist.

3. Verfahren nach einem der Ansprüche 1 bis 2, wobei der mindestens eine Eigenwert ferner einen Hot-Spot-Bereich umfasst und der Hot-Spot-Bereich eine Anzahl von Kapazitätsrastern in dem ersten Flooding-Bereich des Kapazität-Hot-Spots ist; und das Bestimmen, ob der Berichtspunkt, der mit dem Kapazitäts-Hot-Spot abgeglichen ist, ein durch eine den Bildschirm berührende Wange generierter Berichtspunkt ist, auf Grundlage des mindestens einen Eigenwerts des Kapazitäts-Hot-Spots Folgendes umfasst:
wenn der maximale Kapazitätswert größer als oder gleich einem dritten Kapazitätsschwellenwert ist oder wenn der Kapazitäts-Hot-Spot an einer oberen Kante eines Bildschirms angebracht ist und die Längsspannweite kleiner als oder gleich einem dritten Längsspannweitenschwellenwert ist, Bestimmen, dass der Berichtspunkt, der mit dem Kapazitäts-Hot-Spot abgeglichen ist, ein durch eine nicht schwache Wange generierter Berichtspunkt ist; oder
wenn der Hot-Spot-Bereich größer als oder gleich einem zweiten Bereichsschwellenwert ist oder wenn die Längsspannweite größer als oder gleich einem vierten Längsspannweitenschwellenwert ist und die Horizontalspannweite größer als oder gleich einem zweiten Horizontalspannweitenschwellenwert ist, Bestimmen, dass der Berichtspunkt, der mit dem Kapazitäts-Hot-Spot abgeglichen ist, der durch die den Bildschirm berührende Wange generierte Berichtspunkt ist; oder
wenn der Hot-Spot-Bereich größer als oder gleich einem dritten Bereichsschwellenwert ist oder wenn die Längsspannweite größer als oder gleich einem fünften Längsspannweitenschwellenwert ist, Bestimmen, dass ein Ergebnis "unsicher" ist; oder
wenn keine der vorangehenden Bedingungen erfüllt ist, Bestimmen, dass der Berichtspunkt, der mit dem Kapazitäts-Hot-Spot abgeglichen ist, ein durch eine nicht schwache Wange generierter Berichtspunkt ist.

4. Verfahren nach einem beliebigen der Ansprüche 1 bis 3, wobei der mindestens eine Eigenwert ferner einen Hot-Spot-Bereich umfasst und der Hot-Spot-Bereich eine Anzahl von Kapazitätsrastern in dem ersten Flooding-Bereich des Kapazität-Hot-Spots ist; und
das Bestimmen, ob der Berichtspunkt, der mit dem Kapazitäts-Hot-Spot abgeglichen ist, ein durch ein den Bildschirm berührendes Ohr generierter Berichtspunkt ist, auf Grundlage des mindestens einen Eigenwerts des Kapazitäts-Hot-Spots Folgendes umfasst:
wenn der maximale Kapazitätswert kleiner als ein vierter Kapazitätsschwellenwert ist, Bestimmen, dass der Berichtspunkt, der mit dem Kapazitäts-Hot-Spot abgeglichen ist, ein durch kein Ohr generierter Berichtspunkt ist; oder
wenn eine Axialrichtung einer Hauptachse der Ellipse, die durch Anpassen des ersten Flooding-Bereichs des Kapazitäts-Hot-Spots erlangt wird, unten rechts liegt und der untere linke Schattenbereich größer als oder gleich einem vierten Bereichsschwellenwert ist oder wenn eine Axialrichtung einer Hauptachse der Ellipse, die durch Anpassen des ersten Flooding-Bereichs des Kapazitäts-Hot-Spots erlangt wird, unten links liegt und der untere rechte Schattenbereich größer als oder gleich einem fünften Bereichsschwellenwert ist, Bestimmen, dass der Berichtspunkt, der mit dem Kapazitäts-Hot-Spot abgeglichen ist, der durch das den Bildschirm berührende Ohr generierte Berichtspunkt ist; oder
wenn der Hot-Spot-Bereich kleiner als ein sechster Bereichsschwellenwert ist oder wenn der Kapazitäts-Hot-Spot an den oberen Rand des Bildschirms angebracht ist und die Längsspannweite kleiner als oder gleich einem sechsten Längsspannweitenschwellenwert ist, Bestimmen, dass der Berichtspunkt, der mit dem Kapazitäts-Hot-Spot abgeglichen ist, ein durch kein Ohr generierter Berichtspunkt ist; oder
wenn der Oberflächenwiderstand größer als ein erster Oberflächenwiderstandsschwellenwert ist und eine vertikale Koordinate in der Schwerpunktkoordinate größer als ein erster Koordinatenschwellenwert ist, Bestimmen, dass der Berichtspunkt, der mit dem Kapazitäts-Hot-Spot abgeglichen ist, der durch das Ohr generierte Berichtspunkt ist; oder
wenn der Oberflächenwiderstand größer als ein zweiter Oberflächenwiderstandsschwellenwert ist, Bestimmen, dass ein Ergebnis "unsicher" ist; oder
wenn keine der vorangehenden Bedingungen erfüllt ist, Bestimmen, dass der Berichtspunkt, der mit dem Kapazitäts-Hot-Spot abgeglichen ist, ein durch kein Ohr generierter Berichtspunkt ist.

5. Verfahren nach einem beliebigen der Ansprüche 1 bis 4, wobei das Durchführen einer Merkmalserkennung an einem Kapazitäts-Hot-Spot, um mindestens einen Eigenwert des Kapazitäts-Hot-Spots zu bestimmen, Folgendes umfasst:
Durchführen einer Merkmalserkennung an einem Kapazitäts-Hot-Spot, der sich in dem Kapazitäts-Hot-Spot-Satz eines zweiten Frames befindet und nicht mit einem Berichtspunkt in dem Berichtspunktsatz abgestimmt ist, um den mindestens einen Eigenwert des Kapazitäts-Hot-Spots zu bestimmen, wobei der zweite Frame ein Frame ist, der eine voreingestellte Bedingung erfüllt.

6. Berichtspunktausgabesteuerungsvorrichtung, wobei die Vorrichtung einen Speicher (102), einen kapazitiven Touchscreen und einen Prozessor (150) umfasst, wobei
der Speicher dazu konfiguriert ist, eine Programmanweisung zu speichern;
der Prozessor dazu konfiguriert ist, das Verfahren nach einem der Ansprüche 1 bis 5 auf Grundlage der auf dem Speicher gespeicherten Programmanweisung durchzuführen; und
der kapazitive Touchscreen dazu konfiguriert ist, eine Vielzahl von Kapazitätssignalen zu generieren, sodass der Prozessor auf Grundlage der Kapazitätssignale einen Berichtspunktsatz und einen Kapazitäts-Hot-Spot-Satz bestimmen kann.

7. Computerlesbares Speichermedium, das ein Programm speichert, wobei das Programm eine Anweisung umfasst, und wenn die Anweisung durch ein Endgerät ausgeführt wird, das Endgerät in die Lage versetzt wird, das Verfahren nach einem beliebigen der Ansprüche 1 bis 5 durchzuführen.

8. Computer-Programmprodukt, das eine Anweisung umfasst, wobei, wenn das Computer-Programmprodukt auf einem Computer ausgeführt wird, der Computer in die Lage versetzt wird, das Verfahren nach einem beliebigen der Ansprüche 1 bis 5 durchzuführen.

## Revendications

1. Procédé de commande d'émission de point de rapport, dans lequel le procédé comprend :
l'obtention d'une trame de signaux capacitifs plein écran et une valeur de coordonnée de chaque point de rapport dans un ensemble de points de rapport, l'ensemble de points de rapport comprenant une pluralité de points de rapport, les signaux capacitifs étant générés par un écran tactile capacitif ;
la détermination d'un ensemble de points chauds capacitifs sur l'écran tactile capacitif sur la base des signaux capacitifs plein écran, l'ensemble de points chauds capacitifs comprenant une pluralité de points chauds capacitifs, la détermination d'un ensemble de points chauds capacitifs sur un écran sur la base des signaux capacitifs plein écran comprenant :
la détermination d'au moins une valeur maximale de signaux capacitifs sur l'écran sur la base des signaux capacitifs plein écran ;
le démarrage de l'inondation à partir d'une grille de capacité correspondant à chaque valeur maximale, et l'ajout d'une grille de capacité dont le signal capacitif est supérieur à un premier seuil de capacité à une première zone d'inondation du point chaud de capacité ; et
le commencement de l'inondation de la grille de capacité correspondant à chaque valeur maximale, et l'ajout d'une grille de capacité dont le signal capacitif est supérieur à un deuxième seuil de capacité à une deuxième zone d'inondation du point chaud de capacité, le premier seuil de capacité étant supérieur au deuxième seuil de capacité, dans lequel chaque point chaud de capacité comprend une première zone d'inondation et une deuxième zone d'inondation ;
la mise en correspondance de chaque point de rapport dans l'ensemble de points de rapport avec un point chaud de capacité dans l'ensemble de points chauds de capacité, pour déterminer des informations de point de rapport correspondant à chaque point chaud de capacité ;
la réalisation (101) d'une détection de caractéristique sur un point chaud de capacité dans l'ensemble de points chauds de capacité pour déterminer au moins une valeur propre du point chaud de capacité ;
le fait de déterminer (707) si un état actuel du point chaud de capacité sur lequel la détection de caractéristique est effectuée est un état de forme irrégulière ;
lorsque l'état actuel du point chaud de capacité sur lequel la détection de caractéristique est effectuée est l'état de forme irrégulière, le fait de déterminer que chaque point de rapport correspondant à chaque point chaud de capacité dans la pluralité de points chauds de capacité est le point de rapport généré par un toucher de forme irrégulière ;
lorsque l'état actuel n'est pas l'état de forme irrégulière, le fait de déterminer (102), sur la base de l'au moins une valeur propre du point chaud de capacité sur lequel la détection de caractéristique est effectuée, si le point de rapport correspondant au point chaud de capacité est un point de rapport généré par un toucher de forme irrégulière, dans lequel un toucher de forme irrégulière correspond à au moins l'une parmi : une joue collée à l'écran tactile capacitif, une joue touchant l'écran tactile capacitif, et une oreille touchant l'écran tactile capacitif ; et
lorsqu'il est déterminé que le point de rapport est le point de rapport généré par le toucher de forme irrégulière, le basculement de l'état actuel du point chaud de capacité sur lequel la détection de caractéristique est effectuée dans l'état de forme irrégulière et le fait de sauter (103) l'émission du point de rapport, dans lequel
l'au moins une valeur propre comprend au moins une étendue horizontale et/ou une étendue longitudinale et/ou une excentricité et/ou une coordonnée de barycentre et/ou une valeur de capacité maximale et/ou une longueur d'ombre supérieure et/ou une longueur d'ombre inférieure et/ou une longueur d'ombre gauche et/ou une longueur d'ombre droite et/ou une longueur d'ombre moyenne et/ou une zone d'ombre supérieure gauche et/ou une zone d'ombre inférieure droite et/ou une zone d'ombre supérieure droite et/ou une zone d'ombre inférieure gauche,
dans lequel
l'étendue horizontale est une étendue horizontale de la première zone d'inondation du point chaud de capacité ;
l'étendue longitudinale est une étendue longitudinale de la première zone d'inondation du point chaud de capacité ;
l'excentricité est une excentricité d'ellipse obtenue en aménageant la première zone d'inondation du point chaud de capacité ;
la coordonnée de barycentre est une coordonnée de barycentre de la première zone d'inondation du point chaud de capacité ;
la valeur de capacité maximale est une valeur de capacité maximale dans la première zone d'inondation du point chaud de capacité ;
la longueur d'ombre supérieure est une longueur de la deuxième zone d'inondation à une position supérieure de la première zone d'inondation du point chaud de capacité dans la direction longitudinale ;
la longueur d'ombre inférieure est une longueur de la deuxième zone d'inondation à une position inférieure de la première zone d'inondation du point chaud de capacité dans la direction longitudinale ;
la longueur d'ombre gauche est une longueur de la deuxième zone d'inondation à une position gauche de la première zone d'inondation du point chaud de capacité dans la direction longitudinale ;
la longueur d'ombre droite est une longueur de la deuxième zone d'inondation à une position droite de la première zone d'inondation du point chaud de capacité dans la direction longitudinale ;
la longueur d'ombre moyenne est une longueur moyenne de la deuxième zone d'inondation autour de la première zone d'inondation du point chaud de capacité ;
la zone d'ombre supérieure gauche est une zone de la deuxième zone d'inondation à une position supérieure gauche de la première zone d'inondation du point chaud de capacité ;
la zone d'ombre inférieure droite est une zone de la deuxième zone d'inondation à une position inférieure droite de la première zone d'inondation du point chaud de capacité ;
la zone d'ombre supérieure droite est une zone de la deuxième zone d'inondation à une position supérieure de la première zone d'inondation du point chaud de capacité ; et
la zone d'ombre inférieure gauche est une zone de la deuxième zone d'inondation à une position inférieure gauche de la première zone d'inondation du point chaud de capacité ;
dans lequel, le fait de déterminer, sur la base de l'au moins une valeur propre du point chaud de capacité, si un point de rapport correspondant au point chaud de capacité est un point de rapport généré par un toucher de forme irrégulière comprend :
le fait de déterminer, sur la base de l'au moins une valeur propre du point chaud de capacité, si le point de rapport correspondant au point chaud de capacité est un point de rapport généré par une joue collée à l'écran, dans lequel un premier résultat de détermination comprend «joue forte», «joue non forte» et «incertain» ;
le fait de déterminer sur la base de l'au moins une valeur propre du point chaud de capacité, si le point de rapport correspondant au point chaud de capacité est un point de rapport généré par une joue touchant l'écran, dans lequel un deuxième résultat de détermination comprend «joue faible», «joue non faible» et «incertain» ;
le fait de déterminer, sur la base de l'au moins une valeur propre du point chaud de capacité, si le point de rapport correspondant au point chaud de capacité est un point de rapport généré par une oreille touchant l'écran, dans lequel un troisième résultat de détermination comprend «oreille», «non-oreille» et «incertain» ; et
lorsque le premier résultat de détermination est «joue forte», ou lorsque le deuxième résultat de détermination est «joue faible», ou lorsque le troisième résultat de détermination est «oreille», le fait de déterminer que le point de rapport est le point de rapport généré par le toucher de forme irrégulière ; ou
lorsque le premier résultat de détermination est «joue non forte», ou lorsque le deuxième résultat de détermination est «joue non faible», et lorsque le troisième résultat de détermination est «non-oreille», le fait de déterminer que le point de rapport n'est pas le point de rapport généré par le toucher de forme irrégulière,
lorsque le premier résultat de détermination, le deuxième résultat de détermination et le troisième résultat de détermination d'une première trame sont tous «incertains», le stockage d'une coordonnée du point de rapport de la première trame ;
lorsqu'il est déterminé, dans une quantité de trames prédéfinie ultérieure, que le point de rapport est le point de rapport généré par le toucher de forme irrégulière, le fait de déterminer que le point de rapport dans la première trame est le point de rapport généré par le toucher de forme irrégulière ; et
lorsqu'il est déterminé, dans une quantité de trames prédéfinie ultérieure, que le point de rapport n'est pas le point de rapport généré par le toucher de forme irrégulière, ou lorsque le premier résultat de détermination, le deuxième résultat de détermination et le troisième résultat de détermination dans la quantité de trames prédéfinie ultérieure sont toutes «incertaines», le fait de déterminer que le point de rapport dans la première trame n'est pas le point de rapport généré par le toucher de forme irrégulière, et l'émission du point de rapport sur la base de la coordonnée du point de rapport de la première trame.

2. Procédé selon la revendication 1, dans lequel l'au moins une valeur propre comprend en outre une zone de point chaud, et la zone de point chaud est une quantité de grilles de capacité dans la première zone d'inondation du point chaud de capacité ; et
le fait de déterminer, sur la base de l'au moins une valeur propre du point chaud de capacité, si le point de rapport correspondant au point chaud de capacité est un point de rapport généré par une joue collée à l'écran comprend :
lorsque la zone de point chaud est inférieure à un premier seuil de zone, le fait de déterminer que le point de rapport correspondant au point chaud de capacité est un point de rapport généré par une joue non forte ; ou
lorsque l'étendue longitudinale est supérieure à un premier seuil d'étendue longitudinale, ou lorsque la longueur d'ombre moyenne est supérieure à un premier seuil de longueur, ou lorsque l'étendue horizontale est inférieure à un premier seuil d'étendue horizontale et l'étendue longitudinale est supérieure à un deuxième seuil d'étendue longitudinale, le fait de déterminer que le point de rapport correspondant au point chaud de capacité est le point de rapport généré par la joue collée à l'écran ; ou
lorsque la longueur d'ombre moyenne est supérieure à un deuxième seuil de longueur, le fait de déterminer qu'un résultat est «incertain» ; ou
lorsqu'aucune des conditions précédentes n'est satisfaite, le fait de déterminer que le point de rapport correspondant au point chaud de capacité est un point de rapport généré par une joue non forte.

3. Procédé selon l'une quelconque des revendications 1 à 2, dans lequel l'au moins une valeur propre comprend en outre une zone de point chaud, et la zone de point chaud est une quantité de grilles de capacité dans la première zone d'inondation du point chaud de capacité ; et
le fait de déterminer, sur la base de l'au moins une valeur propre du point chaud de capacité, si le point de rapport correspondant au point chaud de capacité est un point de rapport généré par une joue touchant l'écran comprend :
lorsque la valeur de capacité maximale est supérieure ou égale à un troisième seuil de capacité, ou lorsque le point chaud de capacité est fixé à un bord supérieur d'un écran et que l'étendue longitudinale est inférieure ou égale à un troisième seuil d'étendue longitudinale, le fait de déterminer que le point de rapport correspondant au point chaud de capacité est un point de rapport généré par une joue non faible ; ou
lorsque la zone de point chaud est supérieure ou égale à un deuxième seuil de zone, ou lorsque l'étendue longitudinale est supérieure ou égale à un quatrième seuil d'étendue longitudinale et que l'étendue horizontale est supérieure ou égale à un deuxième seuil d'étendue horizontale, le fait de déterminer que le point de rapport correspondant au point chaud de capacité est le point de rapport généré par la joue touchant l'écran ; ou
lorsque la zone du point chaud est supérieure ou égale à un troisième seuil de zone, ou lorsque l'étendue longitudinale est supérieure ou égale à un cinquième seuil d'étendue longitudinale, le fait de déterminer qu'un résultat est «incertain» ; ou
lorsqu'aucune des conditions précédentes n'est satisfaite, le fait de déterminer que le point de rapport correspondant au point chaud de capacité est un point de rapport généré par une joue non forte.

4. Procédé selon l'une quelconque des revendications 1 à 3, dans lequel l'au moins une valeur propre comprend en outre une zone de point chaud, et la zone de point chaud est une quantité de grilles de capacité dans la première zone d'inondation du point chaud de capacité ; et
le fait de déterminer, sur la base de l'au moins une valeur propre du point chaud de capacité, si le point de rapport correspondant au point chaud de capacité est un point de rapport généré par une oreille touchant l'écran comprend :
lorsque la valeur de capacité maximale est inférieure à un quatrième seuil de capacité, le fait de déterminer que le point de rapport correspondant au point chaud de capacité est un point de rapport généré par une non-oreille ; ou
lorsqu'une direction axiale d'un grand axe de l'ellipse obtenue en ajustant la première zone d'inondation du point chaud de capacité est inférieure droite, et que la zone d'ombre inférieure gauche est supérieure ou égale à un quatrième seuil de zone, ou lorsqu'une direction axiale d'un grand axe de l'ellipse obtenu en ajustant la première zone d'inondation du point chaud de capacité est inférieure gauche, et que la zone d'ombre inférieure droite est supérieure ou égale à un cinquième seuil de zone, le fait de déterminer que le point de rapport correspondant au point chaud de capacité est le point de rapport généré par l'oreille touchant l'écran ; ou
lorsque la zone de point chaud est inférieure à un sixième seuil de zone, ou lorsque le point chaud de capacité est fixé au bord supérieur de l'écran et que l'étendue longitudinale est inférieure ou égale à un sixième seuil d'étendue longitudinale, le fait de déterminer que le point de rapport correspondant au point chaud de capacité est un point de rapport généré par une non-oreille ; ou
lorsque la résistivité est supérieure à un premier seuil de résistivité et une coordonnée verticale dans la coordonnée du barycentre est supérieure à un premier seuil de coordonnée, le fait de déterminer que le point de rapport correspondant au point chaud de capacité est le point de rapport généré par l'oreille ; ou
lorsque la résistivité est supérieure à un deuxième seuil de résistivité, le fait de déterminer qu'un résultat est «incertain» ; ou
lorsqu'aucune des conditions précédentes n'est satisfaite, le fait de déterminer que le point de rapport correspondant au point chaud de capacité est un point de rapport généré par une non-oreille.

5. Procédé selon l'une quelconque des revendications 1 à 4, dans lequel la réalisation d'une détection de caractéristique sur un point chaud de capacité pour déterminer au moins une valeur propre du point chaud de capacité comprend :
la réalisation d'une détection de caractéristique sur un point chaud de capacité qui se trouve dans l'ensemble de points chauds de capacité d'une seconde trame et qui ne correspond pas à un point de rapport dans l'ensemble de points de rapport, pour déterminer l'au moins une valeur propre du point chaud de capacité, dans lequel la seconde trame est une trame qui répond à une condition prédéfinie.

6. Appareil de commande d'émission de point de rapport, dans lequel l'appareil comprend une mémoire (102), un écran tactile capacitif et un processeur (150), dans lequel
la mémoire est configurée pour stocker une instruction de programme ;
le processeur est configuré pour exécuter le procédé selon l'une quelconque des revendications 1 à 5 sur la base de l'instruction de programme stockée dans la mémoire ; et
l'écran tactile capacitif est configuré pour générer une pluralité de signaux capacitifs de sorte que le processeur peut déterminer un ensemble de points de rapport et un ensemble de points chauds de capacité sur la base des signaux capacitifs.

7. Support de stockage lisible par ordinateur stockant un programme, dans lequel le programme comprend une instruction, et lorsque l'instruction est exécutée par un terminal, le terminal est activé pour exécuter le procédé selon l'une quelconque des revendications 1 à 5.

8. Produit de programme informatique comprenant une instruction, dans lequel lorsque le produit de programme informatique est exécuté sur un ordinateur, l'ordinateur est activé pour exécuter le procédé selon l'une quelconque des revendications 1 à 5.
